# EUROPEAN PATENT APPLICATION

(11) **EP 2 403 299 A1**
(43) Date of publication of application: **04.01.2012**
(21) Application number: 10746145.1
(22) Date of filing: 19.02.2010
(51) Int. Cl.: H04W 48/16, H04W 36/00, H04W 48/18, H04W 88/06

(54) **CONTROL APPARATUS, WIRELESS NETWORK CONTROL APPARATUS, BASE STATION APPARATUS, AND COMMUNICATION CONTROL METHOD**

(30) Priority: 26.02.2009 JP 2009044633
(71) Applicant: NTT DOCOMO, INC., Chiyoda-ku Tokyo 100-6150 (JP)
(72) Inventor: ISHII, Hiroyuki, Tokyo 100-6150 (JP); FURUTANI, Koji, Tokyo 100-6150 (JP)
(74) Representative: HOFFMANN EITLE
(86) International application number: PCT/JP2010/052555
(87) International publication number: WO 2010/098264

(57) **Abstract**

User equipment terminal includes a first user equipment terminal capable of communication in a first communication system and a second user equipment terminal capable of communication in a second communication system whose radio access technology is different from those of the first communication system. The first communication system is capable of communication in first and second frequency bands, and the second communication system is capable of communication in the first frequency band. A controller includes a determining unit configured to determine whether a user equipment terminal under the control of the controller is the first user equipment terminal or the second user equipment terminal; a standby system and frequency band specifying unit configured to specify, for the user equipment terminal determined to be the second user equipment terminal, that a communication system and a frequency band in which the user equipment terminal should be in the standby state are the first communication system and the first frequency band, respectively; and a reporting unit configured to report the specified communication system and the frequency band.

## Description

### TECHNICAL FIELD

The present invention generally relates to a mobile communication system, and specifically relates to a radio network controller, a base station apparatus, and a communication control method.

### BACKGROUND ART

Super 3G is standardized as LTE (Long Term Evolution) in 3GPP (3rd Generation Partnership Project) that is a standards body for W-CDMA (Wideband-Code Division Multiple Access). Super 3G is a standard evolved from HSPA (High Speed Packet Access) that is an enhancement of W-CDMA. According to Super 3G, high-speed communication can be achieved in downlink at the rate of 100 Mbps or higher and in uplink at the rate of 50 Mbps or higher, while delays and frequency usage efficiencies are improved.

As a Super 3G system will be deployed in the future, it is expected that the Super 3G system will coexist with the existing mobile communication system. The existing mobile communication system includes a W-CDMA mobile communication system.

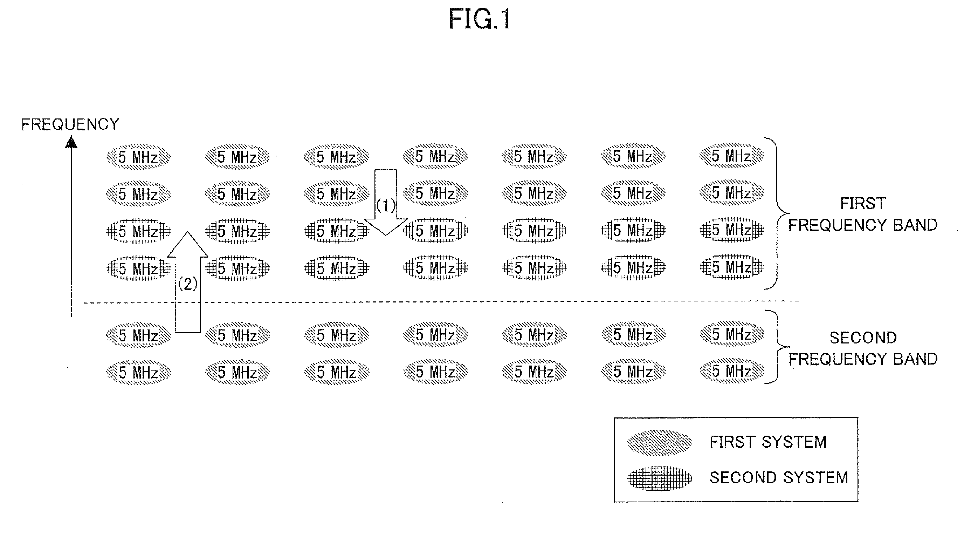

Fig. 1 shows an example where plural different mobile communication systems coexist. When the Super 3G system is deployed, a frequency carrier used in the existing system (for example, a frequency carrier according to W-CDMA) and a frequency carrier used in the Super 3G system are combined. In Fig. 1, the horizontal axis represents sites or locations and the vertical axis represents frequencies, which include a first frequency band and a second frequency band. The first frequency band and the second frequency band may be divided at the line of approximately 1 GHz. For example, the first frequency band may include a frequency band higher than or equal to 1 GHz and the second frequency band may include a frequency band lower than 1 GHz.

Alternatively, the first frequency band and the second frequency band may be determined simply based on a difference between frequencies such as a 1.5 GHz band and a 2 GHz band, rather than based on the line of approximately 1 GHz. Alternatively, the first frequency band and the second frequency band may be determined based on a difference between frequency bands (see 3GPP TS 36.101, V 8.4.0, Dec. 2008 (Non-Patent Reference 1), for example).

In Fig. 1, "5 MHz" represents a transmission bandwidth and an ellipse surrounding "5 MHz" represents a cell. A first system and a second system are distinguished by a hatch pattern. In Fig. 1, the first frequency band and the second frequency band are assigned to the first system, while the first frequency band is assigned to the second system. This assignment is shown for the purpose of illustration only and other assignments may be used. The first system may be a W-CDMA system and the second system may be a Super 3G system.

In a mobile communication system, a user equipment terminal (mobile station) typically has plural operating states. The operating states include a connected state and an idle state (standby state). In the connected state, the user equipment terminal is in communication with a base station apparatus. In the idle state, the user equipment terminal is not in communication with the base station apparatus.

A user equipment terminal in the idle state selects a cell based on a propagation condition. Then, the user equipment terminal receives a paging channel transmitted from the cell at predetermined timings. Based on the received paging channel, the user equipment terminal checks the presence or absence of a flag indicating an incoming call for the user equipment terminal. When the user equipment terminal identifies a flag indicating an incoming call for the user equipment terminal, the user equipment terminal starts random access procedures and accesses the cell within which the user equipment terminal is situated in uplink. Then, the user equipment terminal establishes a connection to the cell and changes to the connected state. At this moment, the network side can identify the cell within which the user equipment terminal is situated. The state in which the user equipment terminal in the idle state waits for a paging signal to be received is called the "standby" state.

The user equipment terminal in the idle state may also start the random access procedures to change to the connected state. For example, the user equipment terminal in the idle state starts the random access procedures at a command for originating a call. For example, the command for originating a call is initiated when the user pushes a dial button.

### [List of Non-Patent References]

[Non-Patent Reference 1] 3GPP TS 36.101, V 8.4.0, Dec. 2008
[Non-Patent Reference 2] 3GPP TS 36.300, V 8.7.0, Dec. 2008

### DISCLOSURE OF INVENTION

### [PROBLEM(S) TO BE SOLVED BY THE INVENTION]

A user equipment terminal in the idle state selects a cell based on a propagation condition and becomes in the standby state in the cell. When the user equipment terminal in the idle state is situated in an environment where plural different mobile communication systems coexist, the probability of success in performing handover from the mobile communication system in which the user equipment terminal is in the standby state to a mobile communication system in which the user equipment terminal performs communication may vary depending on the mobile communication system and/or the frequency band in which the user equipment terminal is in the standby state.

An example is described below in the case where the first system and the second system coexist as shown in Fig. 1. In this example, the first system is the existing system and the second system is the Super 3G system.

For a certain time period after the second system is deployed, the first system has wider coverage than the second system. However, the first system has a lower transmission speed than the second system. In other words, the second system has limited coverage but a higher transmission speed than the first system.

When the user equipment terminal in the idle state is in the standby state in the second system, the user equipment terminal may not receive a paging signal, since the user equipment terminal is in the standby state in the mobile communication system with limited coverage. On the other hand, when the user equipment terminal in the idle state is in the standby state in the first system, the user equipment terminal will receive a paging signal due to sufficient coverage. However, there is a problem of a lower transmission speed after the start of communication. Thus, it is preferable that the user equipment terminal be in the standby state in the first system, perform handover to the second system, and then communicate in the second system.

Since the first frequency band and the second frequency band are assigned to the first system, the user equipment terminal may not perform handover to the second system depending on the frequency band in which the user equipment terminal is in the standby state. This is because propagation characteristics are different depending on the frequency band.

When the user equipment terminal is in the standby state in the first frequency band assigned to the first system and performs handover to the second system (handover (1) in Fig. 1), handover is performed in the same frequency band. Thus, the probability of failure in performing handover is lower. On the other hand, when the user equipment terminal is in the standby state in the second frequency band assigned to the first system and performs handover to the second system (handover (2) in Fig. 1), handover is performed between different frequency bands. Since propagation characteristics in the first frequency band is different from those in the second frequency band, the probability of failure in performing handover is higher. This is because a radio wave with a frequency lower than 1 GHz is more likely to be propagated and more likely to penetrate into buildings, while a radio wave with a frequency higher than or equal to 1 GHz is less likely to be propagated and less likely to penetrate into buildings.

Typically, a radio wave with a frequency lower than 1 GHz is more likely to be propagated and more likely to penetrate into buildings, while a radio wave with a frequency higher than or equal to 1 GHz is less likely to be propagated and less likely to penetrate into buildings. In other words, the higher the frequency is, the less likely the radio wave is to be diffracted around an obstruction.

In view of this problem, it is a general object of the present invention to provide a controller, a radio network controller including the controller, a base station apparatus including the controller, and a communication control method which can improve quality of handover from a mobile communication system in which a user equipment terminal is in the standby state to a mobile communication system in which the user equipment terminal performs communication.

### [MEANS FOR SOLVING THE PROBLEM(S)]

In one aspect of the present invention, there is provided a controller for reporting to user equipment terminals priority levels to be used for cell reselection:
wherein the user equipment terminals includes a first user equipment terminal capable of radio communication in a first mobile communication system and a second user equipment terminal capable of radio communication in a second mobile communication system whose radio access technology is different from those of the first mobile communication system, the first mobile communication system is capable of radio communication in first and second frequency bands, and the second mobile communication system is capable of radio communication in the first frequency band,
the controller including
a determining unit configured to determine whether a user equipment terminal under the control of the controller is the first user equipment terminal or the second user equipment terminal;
a priority level setting unit configured to set a priority level for the user equipment terminal determined by the determining unit to be the second user equipment terminal, the priority level specifying that a mobile communication system and a frequency band in which the user equipment terminal should be in a standby state are the first mobile communication system and the first frequency band, respectively; and
a reporting unit configured to report the priority level set by the priority level setting unit.

In another aspect of the present invention, there is provided a controller for specifying mobile communication systems and frequency bands in which user equipment terminals should be in a standby state:
wherein the user equipment terminals includes a first user equipment terminal capable of radio communication in a first mobile communication system and a second user equipment terminal capable of radio communication in a second mobile communication system whose radio access technology is different from those of the first mobile communication system, the first mobile communication system is capable of radio communication in first and second frequency bands, and the second mobile communication system is capable of radio communication in the first frequency band,
the controller including
a determining unit configured to determine whether a user equipment terminal under the control of the controller is the first user equipment terminal or the second user equipment terminal;
a standby system and frequency band specifying unit configured to specify, for the user equipment terminal determined by the determining unit to be the second user equipment terminal, that a mobile communication system and a frequency band in which the user equipment terminal should be in the standby state are the first mobile communication system and the first frequency band, respectively; and
a reporting unit configured to report the mobile communication system and the frequency band specified by the standby system and frequency band specifying unit.

In another aspect of the present invention, there is provided a controller for reporting to user equipment terminals priority levels to be used for cell reselection:
wherein the user equipment terminals includes a first user equipment terminal capable of radio communication in a first mobile communication system and a second user equipment terminal capable of radio communication in a second mobile communication system whose radio access technology is different from those of the first mobile communication system, the first mobile communication system is capable of radio communication in first and second frequency bands, and the second mobile communication system is capable of radio communication in the first frequency band,
the controller including
a determining unit configured to determine whether a user equipment terminal under the control of the controller is the first user equipment terminal or the second user equipment terminal;
a priority level setting unit configured to set a priority level for the user equipment terminal determined by the determining unit to be the first user equipment terminal, the priority level specifying that a frequency band in which the user equipment terminal should be in a standby state is the second frequency band; and
a reporting unit configured to report the priority level set by the priority level setting unit.

In another aspect of the present invention, there is provided a controller for specifying mobile communication systems and frequency bands in which user equipment terminals should be in a standby state:
wherein the user equipment terminals includes a first user equipment terminal capable of radio communication in a first mobile communication system and a second user equipment terminal capable of radio communication in a second mobile communication system whose radio access technology is different from those of the first mobile communication system, the first mobile communication system is capable of radio communication in first and second frequency bands, and the second mobile communication system is capable of radio communication in the first frequency band,
the controller including
a determining unit configured to determine whether a user equipment terminal under the control of the controller is the first user equipment terminal or the second user equipment terminal;
a standby system and frequency band specifying unit configured to specify, for the user equipment terminal determined by the determining unit to be the first user equipment terminal, that a frequency band in which the user equipment terminal should be in the standby state is the second frequency band; and
a reporting unit configured to report the frequency band specified by the standby system and frequency band specifying unit.

In another aspect of the present invention, there is provided a radio network controller including the controller.

In another aspect of the present invention, there is provided a base station apparatus including the controller.

In another aspect of the present invention, there is provided a communication control method in a controller for reporting to user equipment terminals priority levels to be used for cell reselection:
wherein the user equipment terminals includes a first user equipment terminal capable of radio communication in a first mobile communication system and a second user equipment terminal capable of radio communication in a second mobile communication system whose radio access technology is different from those of the first mobile communication system, the first mobile communication system is capable of radio communication in first and second frequency bands, and the second mobile communication system is capable of radio communication in the first frequency band,
the communication control method including the steps of
determining whether a user equipment terminal under the control of the controller is the first user equipment terminal or the second user equipment terminal;
setting a priority level for the user equipment terminal determined in the determining step to be the second user equipment terminal, the priority level specifying that a mobile communication system and a frequency band in which the user equipment terminal should be in a standby state are the first mobile communication system and the first frequency band, respectively; and
reporting the priority level set in the setting step.

In another aspect of the present invention, there is provided a communication control method in a controller for specifying mobile communication systems and frequency bands in which user equipment terminals should be in a standby state:
wherein the user equipment terminals includes a first user equipment terminal capable of radio communication in a first mobile communication system and a second user equipment terminal capable of radio communication in a second mobile communication system whose radio access technology is different from those of the first mobile communication system, the first mobile communication system is capable of radio communication in first and second frequency bands, and the second mobile communication system is capable of radio communication in the first frequency band,
the communication control method including the steps of
determining whether a user equipment terminal under the control of the controller is the first user equipment terminal or the second user equipment terminal;
specifying, for the user equipment terminal determined in the determining step to be the second user equipment terminal, that a mobile communication system and a frequency band in which the user equipment terminal should be in the standby state are the first mobile communication system and the first frequency band, respectively; and
reporting the mobile communication system and the frequency band specified in the specifying step.

In another aspect of the present invention, there is provided a communication control method in a controller for reporting to user equipment terminals priority levels to be used for cell reselection:
wherein the user equipment terminals includes a first user equipment terminal capable of radio communication in a first mobile communication system and a second user equipment terminal capable of radio communication in a second mobile communication system whose radio access technology is different from those of the first mobile communication system, the first mobile communication system is capable of radio communication in first and second frequency bands, and the second mobile communication system is capable of radio communication in the first frequency band,
the communication control method including the steps of
determining whether a user equipment terminal under the control of the controller is the first user equipment terminal or the second user equipment terminal;
setting a priority level for the user equipment terminal determined in the determining step to be the first user equipment terminal, the priority level specifying that a frequency band in which the user equipment terminal should be in a standby state is the second frequency band; and
reporting the priority level set in the setting step.

In another aspect of the present invention, there is provided a communication control method in a controller for specifying mobile communication systems and frequency bands in which user equipment terminals should be in a standby state:
wherein the user equipment terminals includes a first user equipment terminal capable of radio communication in a first mobile communication system and a second user equipment terminal capable of radio communication in a second mobile communication system whose radio access technology is different from those of the first mobile communication system, the first mobile communication system is capable of radio communication in first and second frequency bands, and the second mobile communication system is capable of radio communication in the first frequency band,
the communication control method including the steps of
determining whether a user equipment terminal under the control of the controller is the first user equipment terminal or the second user equipment terminal;
specifying, for the user equipment terminal determined in the determining step to be the first user equipment terminal, that a frequency band in which the user equipment terminal should be in the standby state is the second frequency band; and
reporting the frequency band specified in the specifying step.

### [ADVANTAGEOUS EFFECT OF THE INVENTION]

According to a controller, a radio network controller, a base station apparatus, and a communication control method as disclosed herein, it is possible to improve quality of handover from a mobile communication system in which a user equipment terminal is in the standby state to a mobile communication system in which the user equipment terminal performs communication.

### BRIEF DESCRIPTION OF THE DRAWINGS

Fig. 1 shows an example illustrating an environment where plural mobile communication systems coexist.
Fig. 2 shows an example illustrating an environment where plural mobile communication systems coexist in accordance with an embodiment of the present invention.
Fig. 3 shows an example illustrating procedures in mobile communication systems in accordance with an embodiment of the present invention.
Fig. 4 shows a functional block diagram of a controller in accordance with an embodiment of the present invention.
Fig. 5 shows a sequence diagram of operations in a mobile communication system in accordance with an embodiment of the present invention.
Fig. 6 shows a functional block diagram of a controller in accordance with an embodiment of the present invention.
Fig. 7 shows a sequence diagram of operations in a mobile communication system in accordance with an embodiment of the present invention.
Fig. 8 shows a functional block diagram of a controller in accordance with an embodiment of the present invention.
Fig. 9 shows a sequence diagram of operations in a mobile communication system in accordance with an embodiment of the present invention.

### DETAILED DESCRIPTION OF THE PREFERRED EMBODIMENTS

With reference to the accompanying drawings, a description is given below with regard to preferred embodiments of the present invention.

Throughout the drawings for illustrating the embodiments, corresponding elements are referenced by the same reference numerals, and the repetitive descriptions are omitted.

### [Mobile communication system]

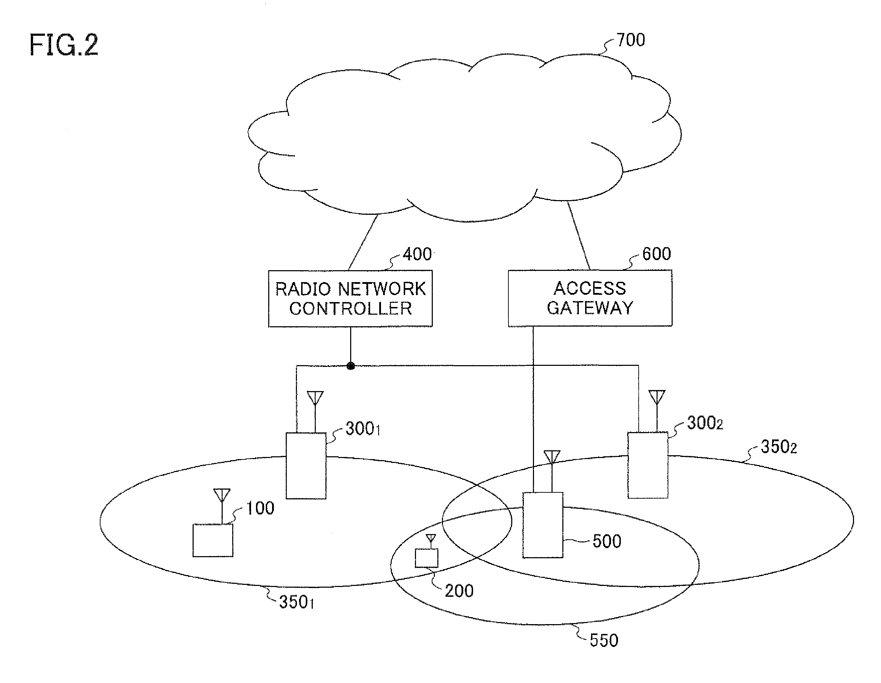

Fig. 2 shows an environment where a radio network controller (RNC) and an LTE base station apparatus (eNB: eNodeB) are used in accordance with an embodiment of the present invention.

This environment where the radio network controller 400 and the LTE base station apparatus 500 are used is an exemplary environment where plural different mobile communication systems coexist. The mobile communication systems include a W-CDMA mobile communication system and an Evolved UTRA and UTRAN mobile communication system. The Evolved UTRA and UTRAN mobile communication system may be referred to as an LTE (Long Term Evolution) system or a Super 3G system.

The W-CDMA system (hereinafter referred to as "a first system") includes user equipment terminals (UE: User Equipment) 100 and 200, W-CDMA base station apparatuses 300ₙ (300₁, 300₂), and a radio network controller 400.

The W-CDMA base station apparatuses 300ₙ are connected to the radio network controller 400, which is in turn connected to a core network 700. The W-CDMA base station apparatuses 300ₙ cover cells 350ₙ. The user equipment terminal 100 can communicate with the W-CDMA base station apparatuses 300ₙ in the cells 350ₙ according to W-CDMA. While Fig. 2 shows one user equipment terminal 100, the system may include two or more user equipment terminals. In addition, while Fig. 2 shows that two W-CDMA base station apparatuses 300ₙ (300₁, 300₂) are connected to the radio network controller 400, either one W-CDMA base station apparatus or three or more W-CDMA base station apparatuses may be connected to the radio network controller 400. Furthermore, while Fig. 2 shows one radio network controller 400, the system may include two or more radio network controllers.

The Evolved UTRA and UTRAN mobile communication system (hereinafter referred to as "a second system") includes a user equipment terminal 200, a LTE base station apparatus 500, and an access gateway 600.

The LTE base station apparatus 500 is connected to the access gateway 600, which is in turn connected to the core network 700. The LTE base station apparatus 500 covers a cell 550. The user equipment terminal 200 can communicate with the LTE base station apparatus 500 in the cell 550 according to Evolved UTRA and UTRAN. The access gateway 600 may be referred to as a mobility management entity/serving gateway (MME/SGW). While Fig. 2 shows one user equipment terminal 200, the system may include two or more user equipment terminals. In addition, while Fig. 2 shows that one LTE base station apparatus 500 is connected to the access gateway 600, two or more LTE base station apparatuses may be connected to the access gateway 600. Furthermore, while Fig. 2 shows one access gateway 600, the system may include two or more access gateways.

The user equipment terminal 200 which can communicate with the LTE base station apparatus 500 can also communicate with the W-CDMA base station apparatuses 300ₙ. In other words, the user equipment terminal 200 is a dual-mode terminal. The dual-mode terminal can communicate in the existing mobile communication system (for example, the W-CDMA system) and a newly-deployed mobile communication system (for example, the LTE system). In Fig. 2, the user equipment terminal 100 can communicate only in the existing mobile communication system, and the user equipment terminal 200 can communicate in the existing mobile communication system and the LTE system.

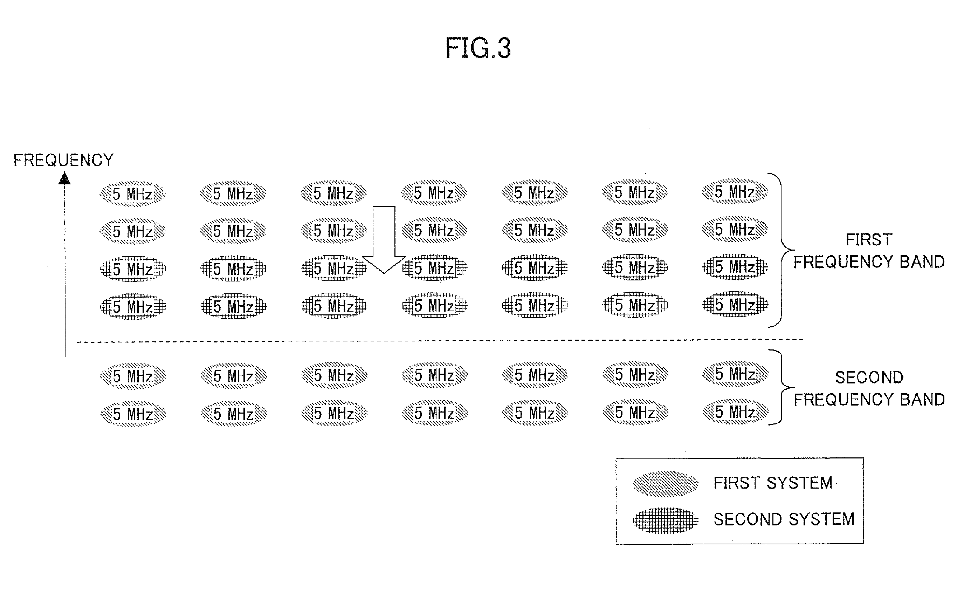

Fig. 3 shows a frequency band in which the user equipment terminal should be in the standby state in the mobile communication system in accordance with an embodiment of the present invention.

As explained with reference to Fig. 1, the horizontal axis represents sites or locations and the vertical axis represents frequencies, which include a first frequency band and a second frequency band. The first frequency band and the second frequency band may be divided at the line of approximately 1 GHz. For example, the first frequency band may include a frequency band higher than or equal to 1 GHz and the second frequency band may include a frequency band lower than 1 GHz. The first and second frequency bands may be further divided into plural frequency bands, respectively.

Alternatively, the first frequency band and the second frequency band may be determined simply based on a difference between frequencies such as a 1.5 GHz band and a 2 GHz band, rather than based on the line of approximately 1 GHz. Alternatively, the first frequency band and the second frequency band may be determined based on a difference between frequency bands (see 3GPP TS 36.101, V 8.4.0, Dec. 2008 (Non-Patent Reference 1), for example).

In Fig. 3, "5 MHz" represents a transmission bandwidth and an ellipse surrounding "5 MHz" represents a cell. In Fig. 3, the site or location in one cell may overlap with the site or location in another cell. The first system and the second system are distinguished by the hatch pattern. In Fig. 3, the first frequency band and the second frequency band are assigned to the first system, while the first frequency band is assigned to the second system. The first system provides services using the first frequency band and the second frequency band. In this embodiment, it is assumed that the W-CDMA base station apparatus 300₁ provides services using the first frequency band and the W-COMA base station apparatus 300₂ provides services using the second frequency band, for example. The second system provides services using the first frequency band. In other words, the LTE base station apparatus 500 provides services using the first frequency band.

### [First scheme]

### [Controller]

According to a first scheme, a mobile communication system and a frequency band in which the user equipment terminal 200 capable of communication (support) in both the first and second systems should be in the standby state are specified to be the first system and the first frequency band, respectively. By specifying that the user equipment terminal 200 should be in the standby state in the first system, the user equipment terminal can receive a paging signal due to sufficient coverage provided by the first system. In addition, by specifying that the user equipment terminal 200 should be in the standby state in the first frequency band among the first and second frequency bands assigned to the first system, handover to the second system can be performed in the same first frequency band. Thus, the probability of failure in performing handover can be reduced and quality of handover can be improved.

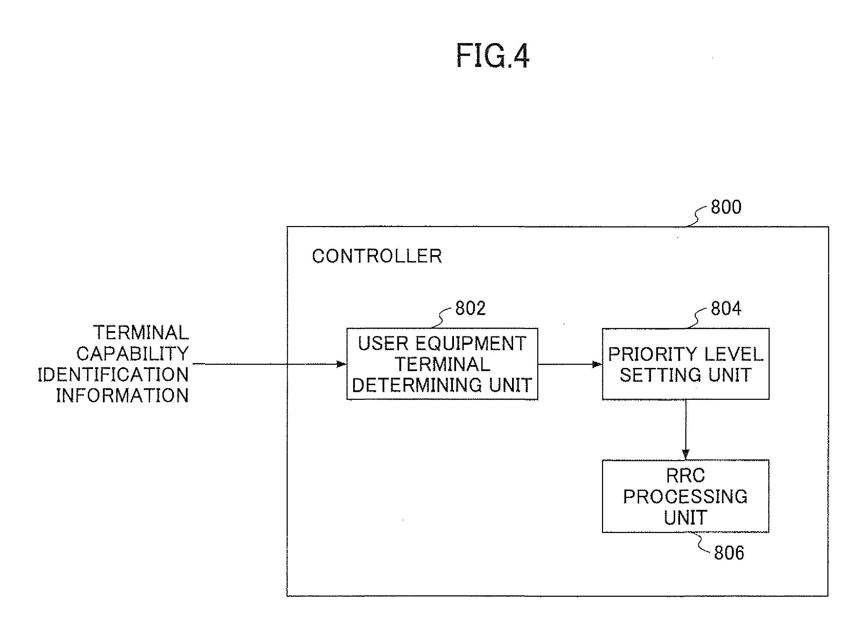

Fig. 4 shows a controller 800 in accordance with an embodiment of the present invention. The controller 800 may be included in the radio network controller 400 or the LTE radio base station apparatus 500. Alternatively, the controller 800 may be included in both the radio network controller 400 and the LTE base station apparatus 500.

The controller 800 includes a user terminal determining unit 802, a priority level setting unit 804, and an RRC (radio resource control) processing unit 806.

Information (terminal capability identification information) used to identify a terminal capability is supplied to the user equipment terminal determining unit 802. The terminal capability identification information is used to identify the capability of a user equipment terminal. When the controller 800 is included in the radio network controller 400, the user equipment terminal may be the user equipment terminal 100 or 200 situated within the areas covered by the base station apparatus 300ₙ (300₁, 300₂). When the controller 800 is included in the LTE base station apparatus 500, the user equipment terminal may be the user equipment terminal 200 situated within the area covered by the LTE base station apparatus 500. For example, the user equipment terminal determining unit 802 acquires terminal capability identification information from the user equipment terminal 100 or 200, when the user equipment terminal 100 or 200 registers its location (location area update or tracking area update). For example, the user equipment terminal determining unit 802 may acquire the capability of the user equipment terminal 100 or 200 by receiving a UE radio capability or the like. The user equipment terminal determining unit 802 determines whether the user equipment terminal is a dual mode terminal capable of communication (support) in both the first and second systems based on the terminal capability identification information. The user equipment terminal determining unit 802 supplies the determination result of the user equipment terminal to the priority level setting unit 804.

It should be noted that the terminal capability identification information may be generated in the core network 700 based on terminal information such as an International Mobile station Equipment Identity and Software Version number (IMEISV) transmitted from the user equipment terminal 100 or 200 to the core network 700, and then transmitted from the core network 700 to the radio network controller 400 or the LTE base station apparatus 500. When the terminal capability identification information is transmitted from the core network 700 to the radio network controller 400 or the LTE base station apparatus 500, the user equipment terminal determining unit 802 acquires the terminal capability identification information of the user equipment terminal 100 or 200 via the core network 700. The IMEISV is a sixteen-digit number defined in the 3GPP standards. The IMEISV can be used to uniquely identify the user equipment terminal or to identify the type of the user equipment terminal.

The priority level setting unit 804 is connected to the user equipment terminal determining unit 802. The priority level setting unit 804 sets a priority level to be used to select a mobile communication system and a frequency band in which the user equipment terminal should be in the standby state.

For example, when the radio network controller 400 includes the controller 800, the priority level setting unit 804 sets a priority level to be used to select a mobile communication system and a frequency band in which the user equipment terminal 100 or 200 should be in the standby state among mobile communication systems and frequency bands covered by the W-CDMA radio base station apparatuses 300ₙ (300₁, 300₂) under the control of the radio network controller 400. The user equipment terminal 200 which is situated within the overlapping area between the cells covered by the W-CDMA base station apparatuses 300₁ and 300₂ reselects a cell in which the user equipment terminal 200 should be in the standby state (performs cell reselection) based on the priority level. In addition, the controller 800 may set the priority level, further considering the cell covered by the LTE base station apparatus 500. When the priority level setting unit 804 sets the priority level considering the mobile communication system and the frequency band covered by the LTE base station apparatus 500, the radio network controller 400 may be connected to the LTE base station apparatus 500 over a wired network or a wireless network. The user equipment terminal 200 which is situated within the overlapping area between the cells covered by the LTE base station apparatus 500 and the W-CDMA base station apparatuses 300₁ and 300₂ reselects a cell in which the user equipment terminal 200 should be in the standby state (performs cell reselection) based on the priority level.

For example, when the LTE base station 500 includes the controller 800, the priority level setting unit 804 sets a priority level to be used to select a mobile communication system and a frequency band in which the user equipment terminal 200 should be in the standby state among mobile communication systems and frequency bands covered by the LTE base station apparatus 500 and other base station apparatuses (not shown) providing services in the second system. The user equipment terminal 200 which is situated within the overlapping area between the cells covered by the LTE base station apparatus 500 and other base station apparatuses providing services in the second system reselects a cell in which the user equipment terminal 200 should be in the standby state (performs cell reselection) based on the priority level. In addition, the controller 800 may set the priority level, further considering the mobile communication systems and frequency bands covered by the W-CDMA base station apparatuses 300₁ and 300₂. When the priority level setting unit 804 sets the priority level considering the mobile communication systems and the frequency bands covered by the W-CDMA base station apparatuses 300₁ and 300₂, the radio network controller 400 may be connected to the LTE base station apparatus 500 over a wired network or a wireless network. The user equipment terminal 200 which is situated within the overlapping area between the cells covered by the LTE base station apparatus 500 and the W-CDMA base station apparatuses 300₁ and 300₂ reselects a cell in which the user equipment terminal 200 should be in the standby state based on the priority level.

In other words, the priority level setting unit 804 sets a priority level to be used to reselect one of radio access technologies (Inter-RAT reselection). When the mobile communication system provides services in plural frequency bands, the priority level setting unit 804 sets a priority level for each frequency band. Based on the determination result of the user equipment terminal supplied by the user equipment terminal determining unit 802, specifically when it is determined that the user equipment terminal is a dual-mode terminal, the priority level setting unit 804 sets a higher priority level for the first system and a higher priority level for the first frequency band. The priority level setting unit 804 supplies the set priority level to the RRC processing unit 806.

The RRC processing unit 806 is connected to the priority level setting unit 804. The RRC processing unit 806 reports information about the priority level (priority level information) to the user equipment terminal. The priority level information includes a priority level for a mobile communication system, and also includes a priority level for a frequency band, if needed. Alternatively, the priority level information may include a priority level for a mobile communication system and a priority level for each frequency carrier in each mobile communication system. The RRC processing unit 806 may include priority level information in an RRC connection release message to report the priority level information.

When the controller 800 is included in the radio network controller 400, the priority level information reported by the controller 800 is transmitted to the W-CDMA base station apparatus 300ₙ. The W-CDMA base station apparatus 300ₙ transmits the priority level information to the user equipment terminal 100 or 200 over a wireless network.

When the controller 800 is included in the LTE base station apparatus 500, the priority level information reported by the controller 800 is transmitted to the user equipment terminal 200 over a wireless network.

The user equipment terminal 200 prepares to be in the standby state in the mobile communication system with the highest priority level among available mobile communication systems (RATs). In this embodiment, since priority level information specifying a higher priority level for the first system is reported to the user equipment terminal 200 which is a dual-mode terminal, the user equipment terminal 200 is more likely to be in the standby state in the first system. In addition, since priority level information specifying a higher priority level for the first frequency band is reported to the user equipment terminal 200 which is a dual-mode terminal, the user equipment terminal 200 is more likely to be in the standby state in the first frequency band. In other words, the user equipment terminal 200 is more likely to be in the standby state under the control of the W-CDMA base station apparatus 300₁.

### [Communication control method]

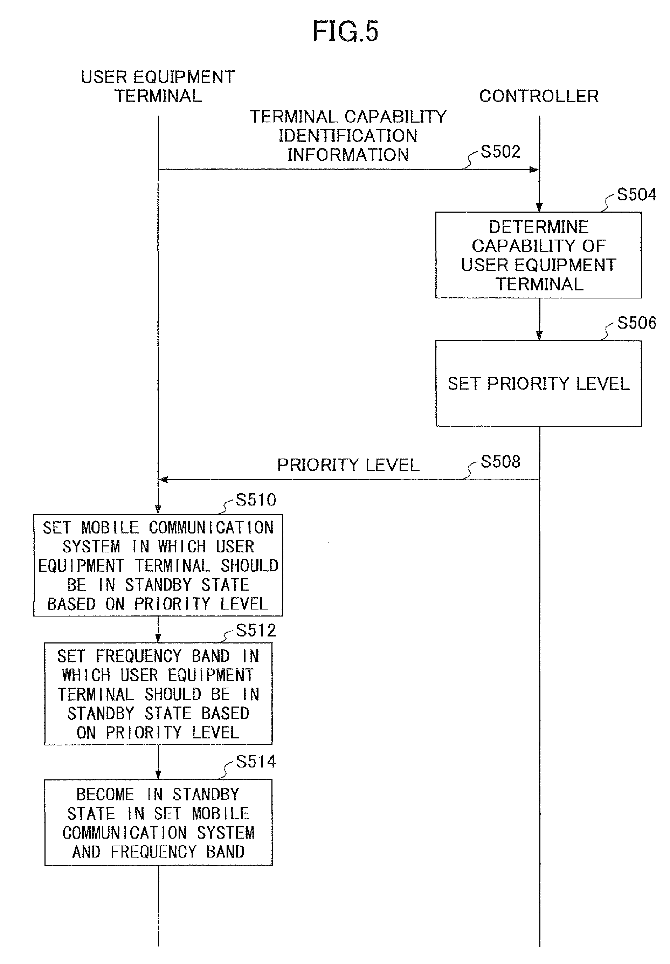

Fig. 5 shows a sequence diagram of procedures between the controller 800 and user equipment terminals in accordance with an embodiment of the present invention. The user equipment terminals may include the user equipment terminals 100 and 200.

Each of the user equipment terminals 100 and 200 transmits terminal capability identification information to the controller 800 (step S502). Specifically, the user equipment terminal determining unit 802 acquires the capability of each of the user equipment terminals 100 and 200 by receiving a UE radio capability or the like.

The controller 800 determines the capability of each of the user equipment terminals 100 and 200 based on the terminal capability identification information (step S504). Specifically, the user equipment terminal determining unit 802 determines the capability of each of the user equipment terminals 100 and 200 based on the terminal capability identification information. The capabilities of the user equipment terminals 100 and 200 include a capability of communication (support) only in the first system and a capability of communication (support) in both the first and second systems.

The controller 800 sets a priority level to be used to select a mobile communication system and a frequency band in which each of the user equipment terminals 100 and 200 should be in the standby state, based on the capability of each of the user equipment terminals 100 and 200 determined in the step S504 (step S506). Specifically, when the capability of the user equipment terminal indicates the capability of communication only in the first system, the priority level setting unit 804 may set the priority level so that the number of user equipment terminals in the standby state in the first frequency band is equal to the number of user equipment terminals in the standby state in the second frequency band. The priority level setting unit 804 may not set the priority level for the mobile communication system, because of the capability of communication only in the first system. Alternatively, the priority level setting unit 804 may set the highest priority level for the first system.

When the capability of the user equipment terminal indicates the capability of communication in both the first and second systems, the priority level setting unit 804 sets a higher priority level for the first system and a higher priority level for the first frequency band. In order for the user equipment terminal capable of communication in both the fist and second systems to be in the standby state in the first system and in the first frequency band, the priority level setting unit 804 may set the highest priority level for the first system and the highest priority level for the first frequency band.

The controller 800 reports information about the priority level set in the step S506 to the user equipment terminal (step S508). Specifically, the RRC processing unit 806 reports information about the priority level (priority level information) set by the priority level setting unit 804 to the user equipment terminal. The RRC processing unit 806 may include priority level information in an RRC connection release message to report the priority level information. The RRC connection release message is report to the user equipment terminal. By including priority level information in an RRC connection release message to report the priority level information, the priority level can be reported to the user equipment terminal before transition to the idle state.

Each of the user equipment terminals 100 and 200 sets a mobile communication system in which the user equipment terminal should be in the standby state based on the priority level information reported by the controller 800 (step S510). Since the priority level for the first system is set higher for the user equipment terminal 200 capable of communication in both the first and second systems, the user equipment terminal 200 prepares to be in the standby state in the first system. It should be noted that the user equipment terminal 200 may prepare to be in the standby state in a system other than the first system.

Each of the user equipment terminals 100 and 200 sets a frequency band in which the user equipment terminal should be in the standby state based on the priority level information reported by the controller (step S512). Since the priority level for the first frequency band is set higher for the user equipment terminal 200 capable of communication in both the first and second systems, the user equipment terminal 200 prepares to be in the standby state in the first frequency band. It should be noted that the user equipment terminal 200 may prepare to be in the standby state in a frequency band other than the first frequency band.

Each of the user equipment terminals 100 and 200 becomes in the standby state in the mobile communication system set in the step S510 and in the frequency band set in the step S512 (step S514). The user equipment terminal 200 capable of communication in both the first and second systems becomes in the standby state in the first system and in the first frequency band.

### [Second scheme]

### [Controller]

According to a second scheme, a mobile communication system and a frequency band (carrier) in which the user equipment terminal 200 capable of communication (support) in both the first and second systems should be in the standby state are specified to be the first system and the first frequency band, respectively. By specifying that the user equipment terminal 200 should be in the standby state in the first system, the user equipment terminal can receive a paging signal due to sufficient coverage provided by the first system. In addition, by specifying that the user equipment terminal 200 should be in the standby state in the first frequency band among the first and second frequency bands assigned to the first system, handover to the second system can be performed in the same first frequency band. Thus, the probability of failure in performing handover can be reduced and quality of handover can be improved.

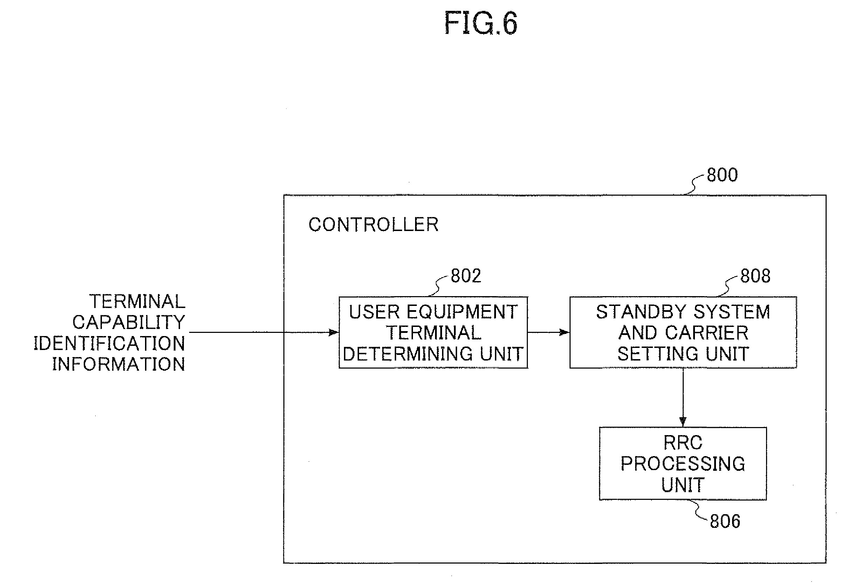

Fig. 6 shows a controller 800 in accordance with an embodiment of the present invention. The controller 800 may be included in the radio network controller 400 or the LTE radio base station apparatus 500. Alternatively, the controller 800 may be included in both the radio network controller 400 and the LTE base station apparatus 500.

The controller 800 includes a user terminal determining unit 802, an RRC processing unit 806, and a standby system and carrier setting unit 808.

Terminal capability identification information is supplied to the user equipment terminal determining unit 802. The terminal capability identification information is used to identify the capability of a user equipment terminal. When the controller 800 is included in the radio network controller 400, the user equipment terminal may be the user equipment terminal 100 or 200 situated within the areas covered by the base station apparatus 300ₙ (300₁, 300₂). When the controller 800 is included in the base station apparatus 500, the user equipment terminal may be the user equipment terminal 200 situated within the area covered by the base station apparatus 500. For example, the user equipment terminal determining unit 802 acquires terminal capability identification information from the user equipment terminal 100 or 200, when the user equipment terminal 100 or 200 registers its location (location area update or tracking area update). For example, the user equipment terminal determining unit 802 may acquire the capability of the user equipment terminal 100 or 200 by receiving a UE radio capability or the like. The user equipment terminal determining unit 802 determines whether the user equipment terminal is a dual mode terminal based on the terminal capability identification information. The user equipment terminal determining unit 802 supplies the determination result of the user equipment terminal to the standby system and carrier setting unit 808.

It should be noted that the terminal capability identification information may be generated in the core network 700 based on an IMEISV or the like transmitted from the user equipment terminal 100 or 200 to the core network 700, and then transmitted from the core network 700 to the radio network controller 400 or the LTE base station apparatus 500. When the terminal capability identification information is transmitted from the core network 700 to the radio network controller 400 or the LTE base station apparatus 500, the user equipment terminal determining unit 802 acquires the terminal capability identification information of the user equipment terminal 100 or 200 via the core network 700. The IMEISV is a sixteen-digit number defined in the 3GPP standards. The IMEISV can be used to uniquely identify the user equipment terminal or to identify the type of the user equipment terminal.

The standby system and carrier setting unit 808 is connected to the user equipment terminal determining unit 802. The standby system and carrier setting unit 808 sets a mobile communication system and a frequency band in which the user equipment terminal 100 or 200 should be in the standby state.

For example, when the radio network controller 400 includes the controller 800, the standby system and carrier setting unit 808 sets the first system under the control of the radio network controller 400, and also sets a carrier in which the user equipment terminal 100 or 200 should be in the standby state among carriers used in the first system. The user equipment terminal 200 which is situated within the overlapping area between the cells covered by the W-CDMA base station apparatuses 300₁ and 300₂ performs cell reselection based on the mobile communication system and the carrier set by the controller 800. In addition, the controller 800 may set the mobile communication system and the carrier in which the user equipment terminal should be in the standby state, further considering the second system under the control of the LTE base station apparatus 500 and carriers used in the second system. When the standby system and carrier setting unit 808 sets the mobile communication system and the carrier in which the user equipment terminal should be in the standby state considering the second system under the control of the LTE base station apparatus 500 and the carriers used in the second system, the radio network controller 400 may be connected to the LTE base station apparatus 500 over a wired network or a wireless network. The user equipment terminal 200 which is situated within the area covered by the first and second system under the control of the LTE base station apparatus 500 and the W-CDMA base station apparatuses 300₁ and 300₂ performs cell reselection based on the mobile communication system and the carrier set by the controller 800.

For example, when the LTE base station apparatus 500 includes the controller 800, the standby system and carrier setting unit 808 sets the second system under the control of the LTE base station apparatus and other base station apparatuses (not shown), and also sets a carrier in which the user equipment terminal 200 should be in the standby state among carriers used in the second system. The user equipment terminal 200 which is situated within the overlapping area between the cells covered by the LTE base station apparatus 500 and other base station apparatuses providing services in the second system performs cell reselection based on the mobile communication system and the carrier set by the controller 800. In addition, the controller 800 may set the mobile communication system and the carrier in which the user equipment terminal should be in the standby state, further considering the first system under the control of the W-CDMA base station apparatuses 300₁ and 300₂ and carriers used in the first system. When the standby system and carrier setting unit 808 sets the mobile communication system and the carrier in which the user equipment terminal should be in the standby state considering the first system under the control of the LTE base station apparatuses 300₁ and 300₂ and the carriers used in the first system, the radio network controller 400 may be connected to the LTE base station apparatus 500 over a wired network or a wireless network. The user equipment terminal 200 which is situated within the area covered by the first and second system under the control of the LTE base station apparatus 500 and the W-CDMA base station apparatuses 300₁ and 300₂ performs cell reselection based on the mobile communication system and the carrier set by the controller 800.

In other words, the standby system and carrier setting unit 808 sets a mobile communication system and a carrier in which the user equipment terminal 100 or 200 should be in the standby state. Based on the determination result of the user equipment terminal supplied by the user equipment terminal determining unit 802, specifically when it is determined that the user equipment terminal is a dual-mode terminal, the standby system and carrier setting unit 808 sets the first system as a mobile communication system in which the user equipment terminal should be in the standby state. In addition, when it is determined that the user equipment terminal is a dual-mode terminal, the standby system and carrier setting unit 808 sets the first frequency band as a carrier in which the user equipment terminal should be in the standby state. The standby system and carrier setting unit 808 supplies information about the mobile communication system and the carrier in which the user equipment terminal should be in the standby state to the RRC processing unit 806. The information about the mobile communication system and the carrier in which the user equipment terminal should be in the standby state includes information about the mobile communication system and information about the frequency band. The information about the frequency band may be a carrier frequency or a frequency number indicating the carrier frequency, for example.

The RRC processing unit 806 is connected to the standby system and carrier setting unit 808. The RRC processing unit 806 reports to the user equipment terminal information about the mobile communication system and the carrier in which the user equipment terminal should be in the standby state. The RRC processing unit 806 may include information about the mobile communication system and the carrier in which the user equipment terminal should be in the standby state in an RRC connection release message to report the information about the communication about the mobile communication system and the carrier.

When the controller 800 is included in the radio network controller 400, information about the mobile communication system and the carrier reported by the controller 800 is transmitted to the W-CDMA base station apparatus 300ₙ. The W-CDMA base station apparatus 300ₙ transmits information about the mobile communication system and the carrier in which the user equipment terminal should be in the standby state to the user equipment terminal 100 or 200 over a wireless network.

When the controller 800 is included in the LTE base station apparatus 500, information about the mobile communication system and the carrier reported by the controller 800 is transmitted to the user equipment terminal 200 over a wireless network.

The user equipment terminal 100 or 200 performs cell reselection based on information about the mobile communication system and the carrier reported by the controller 800. In this embodiment, since information about the mobile communication system in which the user equipment terminal 200 should be in the standby state includes information about the first system when the user equipment terminal 200 is a dual-mode terminal, the user equipment terminal 200 is more likely to be in the standby state in the first system. In addition, since information about the carrier in which the user equipment terminal 200 should be in the standby state includes information about the first frequency band when the user equipment terminal 200 is a dual-mode terminal, the user equipment terminal 200 is more likely to be in the standby state in the first frequency band. In other words, the user equipment terminal 200 is more likely to be in the standby state under the control of the W-CDMA base station apparatus 300₁.

### [Communication control method]

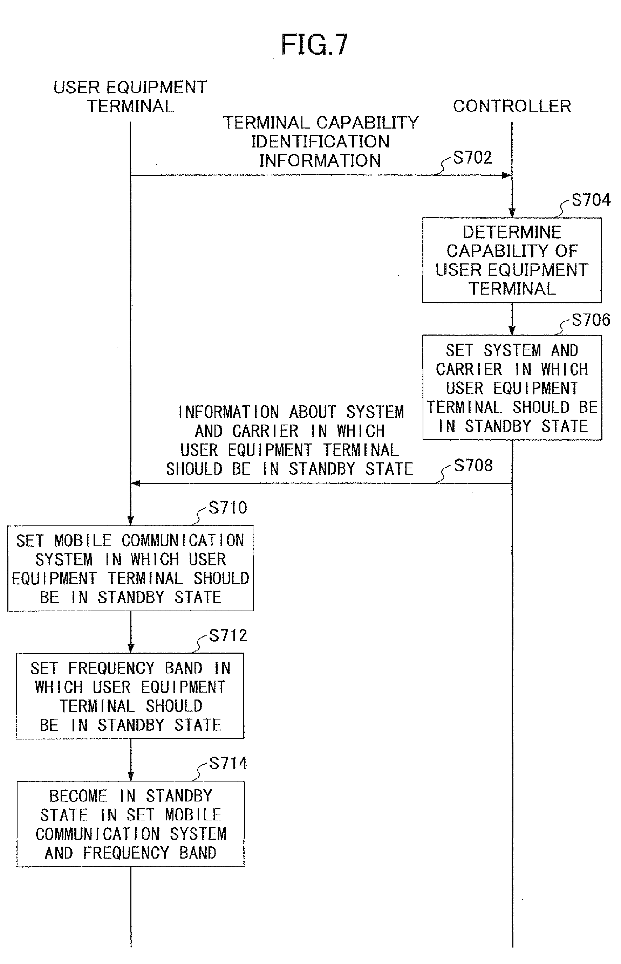

Fig. 7 shows a sequence diagram of procedures between the controller 800 and user equipment terminals in accordance with an embodiment of the present invention. The user equipment terminals may include the user equipment terminals 100 and 200.

Each of the user equipment terminals 100 and 200 transmits terminal capability identification information to the controller 800 (step S702). Specifically, the user equipment terminal determining unit 802 acquires the capability of each of the user equipment terminals 100 and 200 by receiving a UE radio capability or the like.

The controller 800 determines the capability of each of the user equipment terminals 100 and 200 based on the terminal capability identification information (step S704). Specifically, the user equipment terminal determining unit 802 determines the capability of each of the user equipment terminals 100 and 200 based on the terminal capability identification information. The capabilities of the user equipment terminals 100 and 200 include a capability of communication (support) only in the first system and a capability of communication (support) in both the first and second systems.

The controller 800 sets a mobile communication system and a carrier in which each of the user equipment terminals 100 and 200 should be in the standby state, based on the capability of each of the user equipment terminals 100 and 200 determined in the step S704 (step S706). Specifically, when the capability of the user equipment terminal indicates the capability of communication in both the first and second systems, the standby system and carrier setting unit 808 sets the first system as a mobile communication system in which the user equipment terminal should be in the standby state. In addition, when the capability of the user equipment terminal indicates the capability of communication in both the first and second systems, the standby system and carrier setting unit 808 sets the first frequency band as a carrier in which the user equipment terminal should be in the standby state.

The controller 800 reports information about the mobile communication system and the carrier set in the step S706 to the user equipment terminal (step S708). Specifically, the RRC processing unit 806 reports information about the mobile communication system and the carrier set by the standby system and carrier setting unit 808 to the user equipment terminal. The RRC processing unit 806 may include information about the mobile communication system and the carrier in an RRC connection release message to report the information about the mobile communication system and the carrier. The RRC connection release message is report to the user equipment terminal. By including information about the mobile communication system and the carrier in an RRC connection release message to report the information about the mobile communication system and the carrier, the mobile communication system and the carrier in which the user equipment terminal should be in the standby state can be reported to the user equipment terminal before transition to the idle state.

Each of the user equipment terminals 100 and 200 sets a mobile communication system in which the user equipment terminal should be in the standby state based on information about the mobile communication system and the carrier reported by the controller 800 (step S710). Since information about the mobile communication system and the carrier received by the user equipment terminal 200 capable of communication in both the first and second systems includes information about the first system, the user equipment terminal 200 prepares to be in the standby state in the first system. It should be noted that the user equipment terminal 200 may prepare to be in the standby state in a system other than the first system.

Each of the user equipment terminals 100 and 200 sets a frequency band in which the user equipment terminal should be in the standby state based on information about the mobile communication system and the carrier reported by the controller 800 (step S712). Since information about the mobile communication system and the carrier received by the user equipment terminal 200 capable of communication in both the first and second systems includes information about the first frequency band, the user equipment terminal 200 prepares to be in the standby state in the first frequency band. It should be noted that the user equipment terminal 200 may prepare to be in the standby state in a frequency band other than the first frequency band.

Each of the user equipment terminals 100 and 200 becomes in the standby state in the mobile communication system set in the step S710 and in the frequency band set in the step S712 (step S714). The user equipment terminal 200 capable of communication in both the first and second systems becomes in the standby state in the first system and in the first frequency band.

### [Third scheme]

### [Controller]

A third scheme increases the probability that the user equipment terminal 200 capable of communication (support) in both the first and second systems should be in the standby state in the first system and in the first frequency band. By increasing the probability that the user equipment terminal 200 should be in the standby state in the first system, the user equipment terminal can receive a paging signal in most cases due to sufficient coverage provided by the first system. In addition, by increasing the probability that the user equipment terminal 200 should be in the standby state in the first frequency band among the first and second frequency bands assigned to the first system, handover to the second system can be performed in the same first frequency band. Thus, the probability of failure in performing handover can be reduced and quality of handover can be improved.

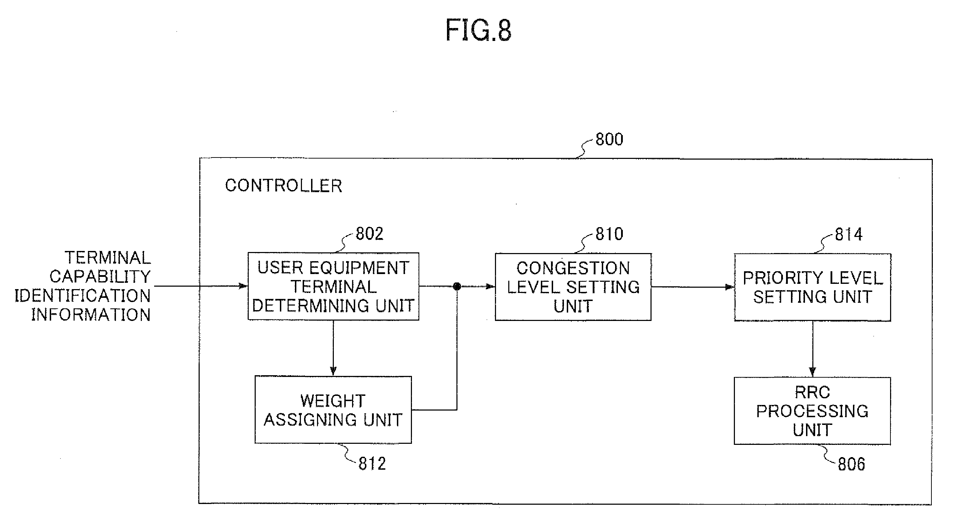

Fig. 8 shows a controller 800 in accordance with an embodiment of the present invention. The controller 800 may be included in the radio network controller 400 or the LTE radio base station apparatus 500. Alternatively, the controller 800 may be included in both the radio network controller 400 and the LTE base station apparatus 500.

The controller 800 includes a user terminal determining unit 802, a congestion level setting unit 810, a weight assigning unit 812, a priority level setting unit 814, and an RRC processing unit 806.

Terminal capability identification information is supplied to the user equipment terminal determining unit 802. The terminal capability identification information is used to identify the capability of a user equipment terminal. When the controller 800 is included in the radio network controller 400, the user equipment terminal may be the user equipment terminal 100 or 200 situated within the areas covered by the W-CDMA base station apparatus 300ₙ (300₁, 300₂). When the controller 800 is included in the LTE base station apparatus 500, the user equipment terminal may be the user equipment terminal 200 situated within the area covered by the LTE base station apparatus 500. For example, the user equipment terminal determining unit 802 acquires terminal capability identification information from the user equipment terminal 100 or 200, when the user equipment terminal 100 or 200 registers its location (location area update or tracking area update). For example, the user equipment terminal determining unit 802 may acquire the capability of the user equipment terminal 100 or 200 by receiving a UE radio capability or the like. The user equipment terminal determining unit 802 determines whether the user equipment terminal is a dual mode terminal based on the terminal capability identification information. The user equipment terminal determining unit 802 supplies the determination result of the user equipment terminal to the congestion level setting unit 810 and the weight assigning unit 812.

It should be noted that the terminal capability identification information may be generated in the core network 700 based on an IMEISV or the like transmitted from the user equipment terminal 100 or 200 to the core network 700, and then transmitted from the core network 700 to the radio network controller 400 or the LTE base station apparatus 500. When the terminal capability identification information is transmitted from the core network 700 to the radio network controller 400 or the LTE base station apparatus 500, the user equipment terminal determining unit 802 acquires the terminal capability identification information of the user equipment terminal 100 or 200 via the core network 700. The IMEISV is a sixteen-digit number defined in the 3GPP standards. The IMEISV can be used to uniquely identify the user equipment terminal or to identify the type of the user equipment terminal.

The congestion level setting unit 810 is connected to the user equipment terminal determining unit 802 and the weight assigning unit 812. The congestion level setting unit 810 sets a congestion level to be used to set a priority level for cell reselection, which is used to select a mobile communication system and a frequency band in which the user equipment terminal 100 or 200 should be in the standby state. The congestion level may include a resource usage rate and/or the number of user equipment terminals. The resource usage rate may include a usage rate in baseband (BB) resources, time resources, frequency resources, code resources, power resources, or the like. The number of user equipment terminals may include the number of user equipment terminals in the standby state, the number of user equipment terminals in communication, the number of user equipment terminals in the RRC connected state, or the number of user equipment terminals having transmission data in their buffers.

For example, when the radio network controller 400 includes the controller 800, the congestion level setting unit 810 sets a congestion level to be used to set a priority level for cell reselection, which is used to select a mobile communication system and a frequency band in which the user equipment terminal 100 or 200 should be in the standby state among mobile communication systems and frequency bands covered by the W-CDMA radio base station apparatuses 300ₙ (300₁, 300₂) under the control of the radio network controller 400. The user equipment terminal 200 which is situated within the overlapping area between the cells covered by the W-CDMA base station apparatuses 300₁ and 300₂ reselects a cell in which the user equipment terminal 200 should be in the standby state based on the priority level for cell reselection, which is set for each mobile communication system and for each carrier based on the congestion level as described below. In addition, the controller 800 may set the congestion level, further considering the mobile communication system and the frequency band covered by the LTE base station apparatus 500. When the congestion level setting unit 810 sets the congestion level considering the mobile communication system and the frequency band covered by the LTE base station apparatus 500, the radio network controller 400 may be connected to the LTE base station apparatus 500 over a wired network or a wireless network. The user equipment terminal 200 which is situated within the overlapping area between the cells covered by the LTE base station apparatus 500 and the W-CDMA base station apparatuses 300₁ and 300₂ reselects a mobile communication system and a frequency band in which the user equipment terminal 200 should be in the standby state based on the priority level for cell reselection, which is set for each mobile communication system and for each carrier based on the congestion level as described below.

For example, when the LTE base station 500 includes the controller 800, the congestion level setting unit 810 sets a congestion level to be used to select a mobile communication system and a frequency band in which the user equipment terminal 200 should be in the standby state among mobile communication systems and frequency bands covered by the LTE base station apparatus 500 and other base station apparatuses (not shown) providing services in the second system. The user equipment terminal 200 which is situated within the overlapping area between the cells covered by the LTE base station apparatus 500 and other base station apparatuses providing services in the second system reselects a mobile communication system and a frequency band in which the user equipment terminal 200 should be in the standby state based on the priority level for cell reselection, which is set for each mobile communication system and for each carrier based on the congestion level as described below. In addition, the controller 800 may set the congestion level, further considering the mobile communication systems and frequency bands covered by the W-CDMA base station apparatuses 300₁ and 300₂. When the congestion level setting unit 810 sets the congestion level considering the mobile communication systems and the frequency bands covered by the W-CDMA base station apparatuses 300₁ and 300₂, the radio network controller 400 may be connected to the LTE base station apparatus 500 over a wired network or a wireless network. The user equipment terminal 200 which is situated within the overlapping area between the cells covered by the LTE base station apparatus 500 and the W-CDMA base station apparatuses 300₁ and 300₂ reselects a mobile communication system and a frequency band in which the user equipment terminal 200 should be in the standby state based on the priority level for cell reselection, which is set for each system and for each carrier based on the congestion level as described below.

The congestion level setting unit 810 sets the congestion level for the mobile communication system according to a weight supplied by the weight assigning unit 812. In addition, the congestion level setting unit 810 sets the congestion level for the frequency band or for each carrier in the frequency band according to a weight supplied by the weight assigning unit 812. The congestion level setting unit 810 supplies the congestion level for the frequency band or for each carrier in the frequency band to the priority level setting unit 814.

The priority level setting unit 814 determines a priority level for cell reselection for each frequency band in the mobile communication system or each carrier in the frequency band, based on the congestion level supplied by the congestion level setting unit 810.

The priority level setting unit 814 supplies the priority level for cell reselection to the RRC processing unit 806. The priority level for cell reselection includes a priority level for cell reselection for a mobile communication system, and also includes a priority level for a frequency band or for each carrier in the frequency band, if needed.

The weight assigning unit 812 is connected to the user equipment terminal determining unit 802. The weight assigning unit 812 assigns a weight to the congestion level. Specifically, the weight assigning unit 812 assigns a weight to the congestion level for the mobile communication system. In addition, the weight assigning unit 812 assigns a weight to the congestion level for the frequency band or for each carrier in the frequency band in which services are provided. Based on the determination result of the user equipment terminal supplied by the user equipment terminal determining unit 802, specifically when it is determined that the user equipment terminal is a dual-mode terminal, the weight assigning unit 812 assigns a weight so that the congestion level for the first system is lower and the congestion level for the first frequency band is lower. Alternatively, based on the determination result of the user equipment terminal supplied by the user equipment terminal determining unit 802, specifically when it is determined that the user equipment terminal is a dual-mode terminal, the weight assigning unit 812 assigns a weight so that the congestion level for the second system is higher. In addition, the weight assigning unit 812 may assign a weight so that the congestion level for the second frequency band is higher. The weight assigning unit 812 supplies information about the weight to the congestion level setting unit 810. The information about the weight includes a weight to be assigned to the congestion level for the mobile communication system, and also includes a weight to be assigned to the congestion level for the frequency band, if needed. Alternatively, the information about the weight may include a weight to be assigned to the congestion level for each carrier in the frequency band.

The RRC processing unit 806 is connected to the priority level setting unit 814. The RRC processing unit 806 reports the priority level for cell reselection to the user equipment terminal.

When the controller 800 is included in the radio network controller 400, the priority level for cell reselection reported by the controller 800 is transmitted to the W-CDMA base station apparatus 300ₙ. The W-CDMA base station apparatus 300ₙ transmits the priority level for cell reselection to the user equipment terminal 100 or 200 over a wireless network.

When the controller 800 is included in the LTE base station apparatus 500, the priority level for cell reselection reported by the controller 800 is transmitted to the user equipment terminal 200 over a wireless network.

The user equipment terminal 100 or 200 prepares to be in the standby state in the mobile communication system with the highest priority level for cell reselection among available mobile communication systems. In this embodiment, since the priority level for cell reselection specifying a higher priority level for cell reselection for the first system and/or a lower priority level for cell reselection for the second system is reported to the user equipment terminal 200 which is a dual-mode terminal, the user equipment terminal 200 is more likely to be in the standby state in the first system. In addition, since the priority level for cell reselection specifying a higher priority level for cell reselection for the first frequency band and/or a lower priority level for cell reselection for the second frequency band is reported to the user equipment terminal 200 which is a dual-mode terminal, the user equipment terminal 200 is more likely to be in the standby state in the first frequency band.

### [Communication control method]

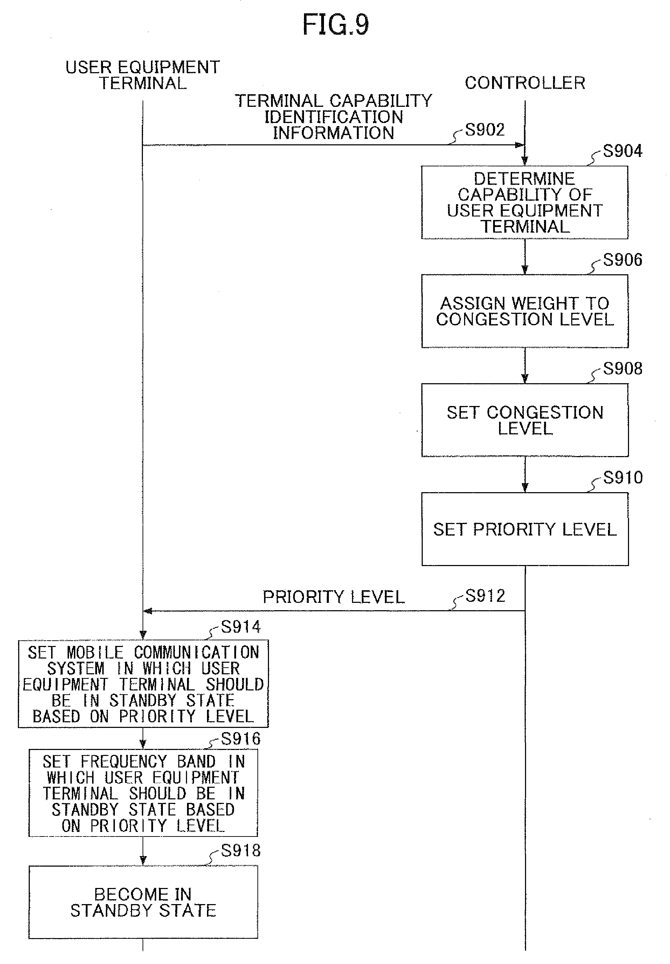

Fig. 9 shows a sequence diagram of procedures between the controller 800 and user equipment terminals in accordance with an embodiment of the present invention. The user equipment terminals may include the user equipment terminals 100 and 200.

Each of the user equipment terminals 100 and 200 transmits terminal capability identification information to the controller 800 (step S902). Specifically, the user equipment terminal determining unit 802 acquires the capability of each of the user equipment terminals 100 and 200 by receiving a UE radio capability or the like.

The controller 800 determines the capability of each of the user equipment terminals 100 and 200 based on the terminal capability identification information (step S904). Specifically, the user equipment terminal determining unit 802 determines the capability of each of the user equipment terminals 100 and 200 based on the terminal capability identification information. The capabilities of the user equipment terminals 100 and 200 include a capability of communication (support) only in the first system and a capability of communication (support) in both the first and second systems.

The controller 800 sets a weight to be assigned to a congestion level to be used to select a mobile communication system and a frequency band in which each of the user equipment terminals 100 and 200 should be in the standby state, based on the capability of each of the user equipment terminals 100 and 200 determined in the step S904 (step S906). Based on the determination result of the user equipment terminal supplied by the user equipment terminal determining unit 802, specifically when it is determined that the user equipment terminal is a dual-mode terminal, the weight assigning unit 812 assigns a weight so that the congestion level for the first system is lower, and also may assign a weight so that the congestion level for the first frequency band is lower. Alternatively, based on the determination result of the user equipment terminal supplied by the user equipment terminal determining unit 802, specifically when it is determined that the user equipment terminal is a dual-mode terminal, the weight assigning unit 812 assigns a weight so that the congestion level for the second system is higher. In addition, the weight assigning unit 812 may assign a weight so that the congestion level for the second frequency band is higher.

The controller 800 sets a congestion level according to the weight set in the step S906 (S908). Specifically, the congestion level setting unit 810 sets the congestion level for the mobile communication system according to the weight supplied by the weight setting unit 812.

The controller 800 sets a priority level for cell reselection based on the congestion level set in the step S908 (step S910). Specifically, the priority level setting unit 814 sets the priority level for cell reselection for the mobile communication system based on the congestion level. The priority level for cell reselection for the mobile communication system may include a priority level for cell reselection for the first system and a priority level for cell reselection for the second system. In addition, when the mobile communication system provides services in plural frequency bands, the priority level setting unit 814 sets a priority level for cell reselection for each frequency band. The priority level for cell reselection for each frequency band may include a priority level for cell reselection for the first frequency band and a priority level for cell reselection for the second frequency band. Alternatively, the priority level setting unit 814 may set a priority level for cell reselection for each carrier in each mobile communication system and in each frequency band.

The controller 800 reports the priority level for cell reselection set in the step S910 to the user equipment terminal (step S912). Specifically, the RRC processing unit 806 reports the priority level for cell reselection set by the priority level setting unit 814 to the user equipment terminal.

Each of the user equipment terminals 100 and 200 sets a mobile communication system in which the user equipment terminal should be in the standby state based on the priority level for cell reselection reported by the controller 800 (step S914). Since the priority level for the first system is set higher for the user equipment terminal 200 capable of communication in both the first and second systems, the user equipment terminal 200 is more likely to be in the standby state in the first system.

Each of the user equipment terminals 100 and 200 sets a frequency band in which the user equipment terminal should be in the standby state based on the priority level for cell reselection reported by the controller 800 (step S916). Since the priority level for cell reselection for the first frequency band is set higher for the user equipment terminal 200 capable of communication in both the first and second systems, the user equipment terminal 200 is more likely to be in the standby state in the first frequency band.

Each of the user equipment terminals 100 and 200 becomes in the standby state in the mobile communication system set in the step S914 and in the frequency band set in the step S916 (step S918). The user equipment terminal 200 capable of communication in both the first and second systems is more likely to become in the standby state in the first system and in the first frequency band.

In the third scheme, the controller 800 may set a mobile communication system and a carrier in which the user equipment terminal 100 or 200 should be in the standby state based on the congestion level. For example, the controller 800 may include a standby system and carrier setting unit in place of the priority level setting unit 814.

For example, when the radio network controller 400 includes the controller 800, the standby system and carrier setting unit 808 sets the first system under the control of the radio network controller 400, and also sets a carrier in which the user equipment terminal 100 or 200 should be in the standby state among carriers used in the first system. The user equipment terminal 200 which is situated within the overlapping area between the cells covered by the W-CDMA base station apparatuses. 300₁ and 300₂ performs cell reselection based on the mobile communication system and the carrier set by the controller 800. In addition, the controller 800 may set the mobile communication system and the carrier in which the user equipment terminal should be in the standby state, further considering the second system under the control of the LTE base station apparatus 500 and carriers used in the second system. When the standby system and carrier setting unit 808 sets the mobile communication system and the carrier in which the user equipment terminal should be in the standby state considering the second system under the control of the LTE base station apparatus 500 and the carriers used in the second system, the radio network controller 400 may be connected to the LTE base station apparatus 500 over a wired network or a wireless network. The user equipment terminal 200 which is situated within the area covered by the first and second system under the control of the LTE base station apparatus 500 and the W-CDMA base station apparatuses 300₁ and 300₂ performs cell reselection based on the mobile communication system and the carrier set by the controller 800.

For example, when the LTE base station apparatus 500 includes the controller 800, the standby system and carrier setting unit 808 sets the second system under the control of the LTE base station apparatus and other base station apparatuses (not shown), and also sets a carrier in which the user equipment terminal 200 should be in the standby state among carriers used in the second system. The user equipment terminal 200 which is situated within the overlapping area between the cells covered by the LTE base station apparatus 500 and other base station apparatuses providing services in the second system performs cell reselection based on the mobile communication system and the carrier set by the controller 800. In addition, the controller 800 may set the mobile communication system and the carrier in which the user equipment terminal should be in the standby state, further considering the first system under the control of the W-CDMA base station apparatuses 300₁ and 300₂ and carriers used in the first system. When the standby system and carrier setting unit 808 sets the mobile communication system and the carrier in which the user equipment terminal should be in the standby state considering the first system under the control of the LTE base station apparatuses 300₁ and 300₂ and the carriers used in the first system, the radio network controller 400 may be connected to the LTE base station apparatus 500 over a wired network or a wireless network. The user equipment terminal 200 which is situated within the area covered by the first and second system under the control of the LTE base station apparatus 500 and the W-CDMA base station apparatuses 300₁ and 300₂ performs cell reselection based on the mobile communication system and the carrier set by the controller 800.

Based on the congestion level supplied by the congestion level setting unit 810, the standby system and carrier setting unit sets a mobile communication system and a carrier in which the user equipment terminal 100 or 200 should be in the standby state. Since the weight is assigned to the congestion level, a mobile communication system in which the user equipment terminal 200 as a dual-mode terminal should be in the standby state is determined considering both that the user equipment terminal 200 should be in the standby state in a mobile communication system with a lower congestion level and that the priority level for the first system is higher. In addition, a carrier in which the user equipment terminal 200 as a dual-mode terminal should be in the standby state is determined considering both that the user equipment terminal 200 should be in the standby state in a carrier with a lower congestion level and that the priority level for the first frequency band is higher. The standby system and carrier setting unit supplies information about the mobile communication system and the carrier in which the user equipment terminal should be in the standby state to the RRC processing unit 806.

### [Fourth scheme]

### [Controller]

According to a fourth scheme, a frequency band in which the user equipment terminal 100 capable of communication (support) only in the first system should be in the standby state is specified to be the second frequency band. By specifying that the user equipment terminal 100 capable of communication only in the first system should be in the standby state in the first system and in the second frequency band, the probability that the user equipment terminal 200 capable of communication in both the first and second systems becomes in the standby state in the first frequency band can be increased, because the number of user equipment terminals in the standby state in the first frequency band becomes fewer. By increasing the probability that the user equipment terminal 200 capable of communication in both the first and second systems becomes in the standby state in the first frequency band, handover from the first system in which the user equipment terminal is in the standby state to the second system can be performed in the same first frequency band. Thus, the probability of failure in performing handover can be reduced and quality of handover can be improved.

The controller 800 may be included in the radio network controller 400 or the LTE radio base station apparatus 500. Alternatively, the controller 800 may be included in both the radio network controller 400 and the LTE base station apparatus 500. The functional block diagram of the controller 800 according to an embodiment of the present invention is the same as shown in Fig. 4. However, in this embodiment, the functionalities of the priority level setting unit 804 are different from those in the controller as described with reference to Fig. 4.

The priority level setting unit 804 is connected to the user equipment terminal determining unit 802. The priority level setting unit 804 sets a priority level to be used to select a mobile communication system and a frequency band in which the user equipment terminal should be in the standby state. Specifically, the priority level setting unit 804 sets a priority level to be used to reselect one of radio access technologies. When the mobile communication system provides services in plural frequency bands, the priority level setting unit 804 sets a priority level for each frequency band. Based on the determination result of the user equipment terminal supplied by the user equipment terminal determining unit 802, specifically when it is determined that the user equipment terminal is capable of communication only in the first system, the priority level setting unit 804 sets a higher priority level for the second frequency band. The priority level setting unit 804 supplies the set priority level to the RRC processing unit 806.

The RRC processing unit 806 is connected to the priority level setting unit 804. The RRC processing unit 806 reports information about the priority level (priority level information) to the user equipment terminal. The priority level information includes a priority level for a mobile communication system, and also includes a priority level for a frequency band, if needed. The RRC processing unit 806 may include priority level information in an RRC connection release message to report the priority level information.

When the controller 800 is included in the radio network controller 400, the priority level information reported by the controller 800 is transmitted to the W-CDMA base station apparatus 300ₙ. The W-CDMA base station apparatus 300ₙ transmits the priority level information to the user equipment terminal 100 or 200 over a wireless network.

When the controller 800 is included in the LTE base station apparatus 500, the priority level information reported by the controller 800 is transmitted to the user equipment terminal 200 over a wireless network.

The user equipment terminal 100 prepares to be in the standby state in the mobile communication system with the highest priority level among available mobile communication systems. In this embodiment, since priority level information specifying a higher priority level for the second frequency band is reported to the user equipment terminal 100 capable of communication only in the first system, the user equipment terminal 100 is more likely to be in the standby state in the first system and in the second frequency band. In other words, the user equipment terminal 100 will be in the standby state under the control of the W-CDMA base station apparatus 300₂.

### [Communication control method]

Procedures between the controller 800 and user equipment terminals in accordance with an embodiment of the present invention are now described with reference to Fig. 5. In the fourth scheme, the procedures after step S506 are different from those in the first scheme. The user equipment terminals may include the user equipment terminals 100 and 200.

In step S506, the controller 800 sets a priority level to be used to select a mobile communication system and a frequency band in which each of the user equipment terminals 100 and 200 should be in the standby state, based on the capability of each of the user equipment terminals 100 and 200 determined in the step S504. Specifically, when the capability of the user equipment terminal indicates the capability of communication only in the first system, the priority level setting unit 804 sets a higher priority level for the second frequency band. The priority level setting unit 804 may not set the priority level for the mobile communication system, because of the capability of communication only in the first system. Alternatively, the priority level setting unit 804 may set the highest priority level for the first system.

When the capability of the user equipment terminal indicates the capability of communication in both the first and second systems, the priority level setting unit 804 may set a higher priority level for the first system. In addition, when the capability of the user equipment terminal indicates the capability of communication in both the first and second systems, the priority level setting unit 804 may set a higher priority level for the first frequency band.

In step S508, the controller 800 reports information about the priority level set in the step S506 to the user equipment terminal. Specifically, the RRC processing unit 806 reports information about the priority level (priority level information) set by the priority level setting unit 804 to the user equipment terminal. The RRC processing unit 806 may include priority level information in an RRC connection release message to report the priority level information. The RRC connection release message is report to the user equipment terminal. By including priority level information in an RRC connection release message to report the priority level information, the priority level can be reported to the user equipment terminal before transition to the idle state.

In step S510, each of the user equipment terminals 100 and 200 sets a mobile communication system in which the user equipment terminal should be in the standby state based on the priority level information reported by the controller 800. The user equipment terminal 100 capable of communication only in the first system prepares to be in the standby state in the first system. Based on the reported priority level information, the user equipment terminal 200 capable of communication in both the first and second systems prepares to be in the standby state in a mobile communication system with a higher priority level.

In step S512, each of the user equipment terminals 100 and 200 sets a frequency band in which the user equipment terminal should be in the standby state based on the priority level information reported by the controller 800. Since the priority level for the second frequency band is set higher for the user equipment terminal 100 capable of communication only in the first system, the user equipment terminal 100 prepares to be in the standby state in the second frequency band. Based on the priority level information reported by the controller 800, the user equipment terminal 200 capable of communication in both the first and second systems prepares to be in the standby state in a frequency band with a higher priority level.

In step S514, each of the user equipment terminals 100 and 200 becomes in the standby state in the mobile communication system set in the step S510 and in the frequency band set in the step S512. For example, the user equipment terminal 100 capable of communication only in the first system becomes in the standby state in the first system and in the second frequency band.

### [Fifth scheme]

### [Controller]

According to a fifth scheme, a carrier in which the user equipment terminal 100 capable of communication (support) only in the first system should be in the standby state is specified to be the second frequency band. By specifying that the user equipment terminal 100 capable of communication only in the first system should be in the standby state in the first system and in the second frequency band, the probability that the user equipment terminal 200 capable of communication in both the first and second systems becomes in the standby state in the first frequency band can be increased, because the number of user equipment terminals in the standby state in the first frequency band becomes fewer. By increasing the probability that the user equipment terminal 200 capable of communication in both the first and second systems becomes in the standby state in the first frequency band, handover from the first system in which the user equipment terminal is in the standby state to the second system can be performed in the same first frequency band. Thus, the probability of failure in performing handover can be reduced and quality of handover can be improved.

The controller 800 may be included in the radio network controller 400 or the LTE radio base station apparatus 500. Alternatively, the controller 800 may be included in both the radio network controller 400 and the LTE base station apparatus 500. The functional block diagram of the controller 800 according to an embodiment of the present invention is the same as shown in Fig. 6. However, in this embodiment, the functionalities of the standby system and carrier setting unit 808 are different from those in the controller as described with reference to Fig. 6.

The standby system and carrier setting unit 808 is connected to the user equipment terminal determining unit 802. The standby system and carrier setting unit 808 sets a mobile communication system and a frequency band in which the user equipment terminal 100 or 200 should be in the standby state. Specifically, the standby system and carrier setting unit 808 sets a mobile communication system in which the user equipment terminal 100 or 200 should be in the standby state. When the mobile communication system provides services in plural frequency bands, the standby system and carrier setting unit 808 sets a frequency band in which the user equipment terminal 100 or 200 should be in the standby state. Based on the determination result of the user equipment terminal supplied by the user equipment terminal determining unit 802, specifically when it is determined that the user equipment terminal is capable of communication only in the first system, the standby system and carrier setting unit 808 sets the second frequency band as a frequency band in which the user equipment terminal should be in the standby state. The standby system and carrier setting unit 808 supplies information about the set mobile communication system and the set frequency band to the RRC processing unit 806.

The information about the mobile communication system and the carrier in which the user equipment terminal should be in the standby state includes information about the mobile communication system and information about the frequency band. The information about the frequency band may be a carrier frequency or a frequency number indicating the carrier frequency, for example.

The RRC processing unit 806 is connected to the standby system and carrier setting unit 808. The RRC processing unit 806 reports to the user equipment terminal information about the mobile communication system and the frequency band in which the user equipment terminal should be in the standby state. The RRC processing unit 806 may include information about the mobile communication system and the frequency band in which the user equipment terminal should be in the standby state in an RRC connection release message to report the information about the communication about the mobile communication system and the frequency band.

When the controller 800 is included in the radio network controller 400, information about the mobile communication system and the frequency band reported by the controller 800 is transmitted to the W-CDMA base station apparatus 300ₙ. The W-CDMA base station apparatus 300ₙ transmits information about the mobile communication system and the frequency band in which the user equipment terminal should be in the standby state to the user equipment terminal 100 or 200 over a wireless network.

When the controller 800 is included in the LTE base station apparatus 500, information about the mobile communication system and the frequency band reported by the controller 800 is transmitted to the user equipment terminal 200 over a wireless network.

The user equipment terminal 100 or 200 performs cell reselection based on information about the mobile communication system and the frequency band reported by the controller 800. In this embodiment, since information about the mobile communication system and the frequency band in which the user equipment terminal 100 should be in the standby state includes information about the second frequency band when the user equipment terminal 100 is capable of communication only in the first system, the user equipment terminal 100 is more likely to be in the standby state in the second frequency band. In other words, the user equipment terminal 100 is more likely to be in the standby state under the control of the W-CDMA base station apparatus 300₂.

### [Communication control method]

Procedures between the controller 800 and user equipment terminals in accordance with an embodiment of the present invention are now described with reference to Fig. 7. In the fifth scheme, the procedures after step S706 are different from those in the second scheme. The user equipment terminals may include the user equipment terminals 100 and 200.

In step S706, the controller 800 sets a mobile communication system and a frequency band in which each of the user equipment terminals 100 and 200 should be in the standby state, based on the capability of each of the user equipment terminals 100 and 200 determined in the step S704. Specifically, when the capability of the user equipment terminal indicates the capability of communication only in the first system, the standby system and carrier setting unit 808 sets the first system as a mobile communication system in which the user equipment terminal 100 should be in the standby state. In addition, when the capability of the user equipment terminal indicates the capability of communication only in the first system, the standby system and carrier setting unit 808 sets the second frequency band as a frequency band in which the user equipment terminal 100 should be in the standby state.

In step S708, the controller 800 reports information about the mobile communication system and the frequency band set in the step S706 to the user equipment terminal. Specifically, the RRC processing unit 806 reports information about the mobile communication system and the frequency band set by the standby system and carrier setting unit 808 to the user equipment terminal. The RRC processing unit 806 may include information about the mobile communication system and the frequency band in an RRC connection release message to report the information about the mobile communication system and the frequency band. The RRC connection release message is report to the user equipment terminal. By including information about the mobile communication system and the frequency band in an RRC connection release message to report the information about the mobile communication system and the frequency band, the mobile communication system and the frequency band in which the user equipment terminal should be in the standby state can be reported to the user equipment terminal before transition to the idle state.

In step S710, each of the user equipment terminals 100 and 200 sets a mobile communication system in which the user equipment terminal should be in the standby state based on information about the mobile communication system and the frequency band reported by the controller 800. The user equipment terminal 100 capable of communication only in the first system prepares to be in the standby state in the first system.

In step S712, each of the user equipment terminals 100 and 200 sets a frequency band in which the user equipment terminal should be in the standby state based on information about the mobile communication system and the frequency band reported by the controller 800. Since information about the mobile communication system and the frequency band received by the user equipment terminal 100 capable of communication only in the first system includes information about the second frequency band, the user equipment terminal 100 prepares to be in the standby state in the second frequency band.

In step S714, each of the user equipment terminals 100 and 200 becomes in the standby state in the mobile communication system set in the step S710 and in the frequency band set in the step S712. The user equipment terminal 100 capable of communication only in the first system becomes in the standby state in the first system and in the second frequency band.

### [Sixth scheme]

### [Controller]

A sixth scheme increases the probability that the user equipment terminal 100 capable of communication (support) only in the first system should be in the standby state in the second frequency band. By increasing the probability that the user equipment terminal 100 capable of communication only in the first system should be in the standby state in the first system and in the second frequency band, the probability that the user equipment terminal 200 capable of communication in both the first and second systems becomes in the standby state in the first frequency band can be increased, because the number of user equipment terminals in the standby state in the first frequency band becomes fewer. By increasing the probability that the user equipment terminal 200 capable of communication in both the first and second systems becomes in the standby state in the first frequency band, handover from the first system in which the user equipment terminal is in the standby state to the second system can be performed in the same first frequency band. Thus, the probability of failure in performing handover can be reduced and quality of handover can be improved.

The controller 800 may be included in the radio network controller 400 or the LTE radio base station apparatus 500. Alternatively, the controller 800 may be included in both the radio network controller 400 and the LTE base station apparatus 500. The functional block diagram of the controller 800 according to an embodiment of the present invention is the same as shown in Fig. 8. However, in this embodiment, the functionalities of the weight assigning unit 812 are different from those in the controller as described with reference to Fig. 8.

The weight assigning unit 812 is connected to the user equipment terminal determining unit 802. The weight assigning unit 812 assigns a weight to the congestion level. Specifically, the weight assigning unit 812 assigns a weight to the congestion level for the mobile communication system. In addition, the weight assigning unit 812 assigns a weight to the congestion level for the frequency band in which services are provided. Based on the determination result of the user equipment terminal supplied by the user equipment terminal determining unit 802, specifically when it is determined that the user equipment terminal is capable of communication only in the first system, the weight assigning unit 812 assigns a weight so that the congestion level for the second frequency band is lower. Alternatively, based on the determination result of the user equipment terminal supplied by the user equipment terminal determining unit 802, specifically when it is determined that the user equipment terminal is capable of communication only in the first system, the weight assigning unit 812 assigns a weight so that the congestion level for the first frequency band is higher. The weight assigning unit 812 supplies information about the set weight to the congestion level setting unit 810. The information about the weight includes a weight to be assigned to the congestion level for the mobile communication system, and also includes a weight to be assigned to the congestion level for the frequency band.

The RRC processing unit 806 is connected to the priority level setting unit 814. The RRC processing unit 806 reports the priority level for cell reselection to the user equipment terminal.

When the controller 800 is included in the radio network controller 400, the priority level for cell reselection reported by the controller 800 is transmitted to the W-CDMA base station apparatus 300ₙ. The W-CDMA base station apparatus 300ₙ transmits the priority level for cell reselection to the user equipment terminal 100 or 200 over a wireless network.

When the controller 800 is included in the LTE base station apparatus 500, the priority level for cell reselection reported by the controller 800 is transmitted to the user equipment terminal 200 over a wireless network.

The user equipment terminal 100 or 200 prepares to be in the standby state in the mobile communication system with the highest priority level for cell reselection among available mobile communication systems. In addition, the user equipment terminal 100 or 200 prepares to be in the standby state in the frequency band with the highest priority level (or with a higher priority level) for cell reselection among available frequency bands.

In this embodiment, since the priority level for cell reselection specifying a higher priority level for cell reselection for the second frequency band and/or a lower priority level for cell reselection for the first frequency band is reported to the user equipment terminal 100 capable of communication only in the first system, the user equipment terminal 100 is more likely to be in the standby state in the first system and in the second frequency band.

### [Communication control method]

Procedures between the controller 800 and user equipment terminals in accordance with an embodiment of the present invention are now described with reference to Fig. 9. In the sixth scheme, the procedures after step S906 are different from those in the third scheme. The user equipment terminals may include the user equipment terminals 100 and 200.

In step S906, the controller 800 sets a weight to be assigned to a congestion level to be used to select a mobile communication system and a frequency band in which each of the user equipment terminals 100 and 200 should be in the standby state, based on the capability of each of the user equipment terminals 100 and 200 determined in the step S904. Based on the determination result of the user equipment terminal supplied by the user equipment terminal determining unit 802, specifically when it is determined that the user equipment terminal is capable of communication only in the first system, the weight assigning unit 812 assigns a weight so that the congestion level for the second frequency band is lower. Alternatively, based on the determination result of the user equipment terminal supplied by the user equipment terminal determining unit 802, specifically when it is determined that the user equipment terminal is capable of communication only in the first system, the weight assigning unit 812 assigns a weight so that the congestion level for the first frequency band is higher.

In step S908, the controller 800 sets a congestion level according to the weight set in the step S906. Specifically, the congestion level setting unit 810 sets the congestion level for the mobile communication system according to the weight supplied by the weight setting unit 812. The congestion level for the mobile communication system may include a congestion level for the first system and a congestion level for the second system. In addition, when the mobile communication system provides services in plural frequency bands, the congestion level setting unit 810 sets a congestion level for each frequency band. The congestion level for each frequency band may include a congestion level for the first frequency band and a congestion level for the second frequency band.

In step S910, the controller 800 sets a priority level for cell reselection based on the congestion level set in the step S908. Specifically, the priority level setting unit 814 sets the priority level for cell reselection for the mobile communication system based on the congestion level. The priority level for cell reselection for the mobile communication system may include a priority level for cell reselection for the first system and a priority level for cell reselection for the second system. In addition, when the mobile communication system provides services in plural frequency bands, the priority level setting unit 814 sets a priority level for cell reselection for each frequency band. The priority level for cell reselection for each frequency band may include a priority level for cell reselection for the first frequency band and a priority level for cell reselection for the second frequency band. Alternatively, the priority level setting unit 814 may set a priority level for cell reselection for each carrier in each mobile communication system and in each frequency band.

In step S912, the controller 800 reports the priority level for cell reselection set in the step S910 to the user equipment terminal. Specifically, the RRC processing unit 806 reports the priority level for cell reselection set by the priority level setting unit 814 to the user equipment terminal.

In step S914, each of the user equipment terminals 100 and 200 sets a mobile communication system in which the user equipment terminal should be in the standby state based on the priority level for cell reselection reported by the controller 800. The user equipment terminal 100 capable of communication only in the first system prepares to be in the standby state in the first system.

In step S916, each of the user equipment terminals 100 and 200 sets a frequency band in which the user equipment terminal should be in the standby state based on the priority level for cell reselection reported by the controller 800. Since the congestion level for the second frequency band is set lower for the user equipment terminal 100 capable of communication only in the first system, the user equipment terminal 100 is more likely to be in the standby state in the second frequency band.

In step S918, each of the user equipment terminals 100 and 200 becomes in the standby state in the mobile communication system set in the step S914 and in the frequency band set in the step S916. The user equipment terminal 100 capable of communication only in the first system is more likely to become in the standby state in the first system and in the second frequency band. As a result, the user equipment terminal 200 capable of communication in both the first and second systems is more likely to become in the standby state in the first frequency band.

In the sixth scheme, the controller 800 may set a mobile communication system and a carrier in which the user equipment terminal 100 or 200 should be in the standby state based on the congestion level. For example, the controller 800 may include a standby system and carrier setting unit in place of the priority level setting unit 814.

Based on the congestion level supplied by the congestion level setting unit 810, the standby system and carrier setting unit sets a mobile communication system and a carrier in which the user equipment terminal 100 or 200 should be in the standby state. Since the weight is assigned to the congestion level, a mobile communication system in which the user equipment terminal 100 capable of communication only in the first system should be in the standby state is determined considering that the user equipment terminal 100 should be in the standby state in a mobile communication system with a lower congestion level. In addition, a carrier in which the user equipment terminal 100 capable of communication only in the first system should be in the standby state is determined considering that the user equipment terminal 100 should be in the standby state in a carrier with a lower congestion level. The standby system and carrier setting unit supplies information about the mobile communication system and the carrier in which the user equipment terminal should be in the standby state to the RRC processing unit 806.

According to an embodiment of the present invention, there is provided a controller for reporting to user equipment terminals priority levels to be used for cell reselection. The user equipment terminals includes a first user equipment terminal capable of communication in a first mobile communication system and a second user equipment terminal capable of communication in a second mobile communication system whose radio access technology is different from those of the first mobile communication system. The first mobile communication system is capable of communication in first and second frequency bands, and the second mobile communication system is capable of communication in the first frequency band. The controller includes a determining unit configured to determine whether a user equipment terminal under the control of the controller is the first user equipment terminal or the second user equipment terminal; a priority level setting unit configured to set a priority level for the user equipment terminal determined by the determining unit to be the second user equipment terminal, the priority level specifying that a mobile communication system and a frequency band in which the user equipment terminal should be in a standby state are the first mobile communication system and the first frequency band, respectively; and a reporting unit configured to report the priority level set by the priority level setting unit.

By specifying that the user equipment terminal determined to be the second user equipment terminal should be in the standby state in the first mobile communication system, the user equipment terminal is more likely to receive a paging signal due to sufficient coverage provided by the first mobile communication system. In addition, by specifying that the user equipment terminal determined to be the second user equipment terminal should be in the standby state in the first frequency band, handover to the second mobile communication system can be performed in the same first frequency band. Thus, the probability of failure in performing handover can be reduced and quality of handover can be improved.

According to an embodiment of the present invention, the controller includes a congestion level setting unit configured to set, for the second user equipment terminal, a congestion level for the second system higher than that for the first system and a congestion level for the second frequency band higher than that for the first frequency band. The priority level setting unit sets the priority level based on the congestion levels set by the congestion level setting unit.

By setting, for the second user equipment terminal, a congestion level for the second system higher than that for the first system and a congestion level for the second frequency band higher than that for the first frequency band, the priority level for the first system can be higher and the priority level for the first frequency band can be higher for the second user equipment terminal.

According to an embodiment of the present invention, there is provided a controller for specifying mobile communication systems and frequency bands in which user equipment terminals should be in a standby state. The user equipment terminals includes a first user equipment terminal capable of radio communication in a first mobile communication system and a second user equipment terminal capable of radio communication in a second mobile communication system whose radio access technology is different from those of the first mobile communication system. The first mobile communication system is capable of radio communication in first and second frequency bands, and the second mobile communication system is capable of radio communication in the first frequency band. The controller includes a determining unit configured to determine whether a user equipment terminal under the control of the controller is the first user equipment terminal or the second user equipment terminal; a standby system and frequency band specifying unit configured to specify, for the user equipment terminal determined by the determining unit to be the second user equipment terminal, that a mobile communication system and a frequency band in which the user equipment terminal should be in the standby state are the first mobile communication system and the first frequency band, respectively; and a reporting unit configured to report the mobile communication system and the frequency band specified by the standby system and frequency band specifying unit.

By specifying that the user equipment terminal determined to be the second user equipment terminal should be in the standby state in the first mobile communication system, the user equipment terminal is more likely to receive a paging signal due to sufficient coverage provided by the first mobile communication system. In addition, by specifying that the user equipment terminal determined to be the second user equipment terminal should be in the standby state in the first frequency band, handover to the second mobile communication system can be performed in the same first frequency band. Thus, the probability of failure in performing handover can be reduced and quality of handover can be improved.

According to an embodiment of the present invention, the controller includes a congestion level setting unit configured to set, for the second user equipment terminal, a congestion level for the second system higher than that for the first system and a congestion level for the second frequency band higher than that for the first frequency band. The standby system and frequency band specifying unit specifies the mobile communication system and the frequency band in which the user equipment terminal should be in the standby state based on the congestion levels set by the congestion level setting unit.

By setting, for the second user equipment terminal, a congestion level for the second system higher than that for the first system and a congestion level for the second frequency band higher than that for the first frequency band, the controller is more likely to specify that the second user equipment terminal should be in the standby status in the first mobile communication system and in the first frequency band.

According to an embodiment of the present invention, there is provided a controller for reporting to user equipment terminals priority levels to be used for cell reselection. The user equipment terminals includes a first user equipment terminal capable of radio communication in a first mobile communication system and a second user equipment terminal capable of radio communication in a second mobile communication system whose radio access technology is different from those of the first mobile communication system. The first mobile communication system is capable of radio communication in first and second frequency bands, and the second mobile communication system is capable of radio communication in the first frequency band. The controller includes a determining unit configured to determine whether a user equipment terminal under the control of the controller is the first user equipment terminal or the second user equipment terminal; a priority level setting unit configured to set a priority level for the user equipment terminal determined by the determining unit to be the first user equipment terminal, the priority level specifying that a frequency band in which the user equipment terminal should be in a standby state is the second frequency band; and a reporting unit configured to report the priority level set by the priority level setting unit.

By specifying that the user equipment terminal determined to be the first user equipment terminal should be in the standby state in the second frequency band, the probability that the second user equipment terminal becomes in the standby state in the first frequency band can be increased, because the number of user equipment terminals in the standby state in the first frequency band becomes fewer. By increasing the probability that the second user equipment terminal becomes in the standby state in the first frequency band, even if the second user equipment terminal is in the standby state in the first radio communication system, handover to the second mobile communication system can be performed in the same first frequency band. Thus, the probability of failure in performing handover can be reduced and quality of handover can be improved.

According to an embodiment of the present invention, the controller includes a congestion level setting unit configured to set, for the first user equipment terminal, a congestion level for the first frequency band higher than that for the second frequency band. The priority level setting unit sets the priority level based on the congestion levels set by the congestion level setting unit.

By setting, for the first user equipment terminal, a congestion level for the first frequency band higher than that for the second frequency band, the priority level for the second frequency band can be higher for the first user equipment terminal.

According to an embodiment of the present invention, there is provided a controller for specifying mobile communication systems and frequency bands in which user equipment terminals should be in a standby state. The user equipment terminals includes a first user equipment terminal capable of radio communication in a first mobile communication system and a second user equipment terminal capable of radio communication in a second mobile communication system whose radio access technology is different from those of the first mobile communication system. The first mobile communication system is capable of radio communication in first and second frequency bands, and the second mobile communication system is capable of radio communication in the first frequency band. The controller includes a determining unit configured to determine whether a user equipment terminal under the control of the controller is the first user equipment terminal or the second user equipment terminal; a standby system and frequency band specifying unit configured to specify, for the user equipment terminal determined by the determining unit to be the first user equipment terminal, that a frequency band in which the user equipment terminal should be in the standby state is the second frequency band; and a reporting unit configured to report the frequency band specified by the standby system and frequency band specifying unit.

By specifying that the user equipment terminal determined to be the first user equipment terminal should be in the standby state in the second frequency band, the probability that the second user equipment terminal becomes in the standby state in the first frequency band can be increased, because the number of user equipment terminals in the standby state in the first frequency band becomes fewer. By increasing the probability that the second user equipment terminal becomes in the standby state in the first frequency band, even if the second user equipment terminal is in the standby state in the first radio communication system, handover to the second mobile communication system can be performed in the same first frequency band. Thus, the probability of failure in performing handover can be reduced and quality of handover can be improved.

According to an embodiment of the present invention, the controller includes a congestion level setting unit configured to set, for the first user equipment terminal, a congestion level for the first frequency band higher than that for the second frequency band. The standby system and frequency band specifying unit specifies that the frequency band in which the user equipment terminal should be in the standby state is the second frequency band based on the congestion levels set by the congestion level setting unit.

By setting, for the first user equipment terminal, a congestion level for the first frequency band higher than that for the second frequency band, the controller is more likely to specify that the first user equipment terminal should be in the standby status in the second frequency band.

According to an embodiment of the present invention, there is provided a radio network controller including the controller. The radio network controller can specify a mobile communication system and a frequency band in which a user equipment terminal supporting the existing system should be in the standby state. In addition, the radio network controller can specify a mobile communication system and a frequency band in which a user equipment terminal supporting the LTE system should be in the standby state.

According to an embodiment of the present invention, there is provided a base station apparatus including the controller. The base station apparatus can specify a mobile communication system and a frequency band in which a user equipment terminal supporting the LTE system should be in the standby state.

While the above-mentioned embodiments have been described by way of example using the W-CDMA system and the Evolved UTRA and UTRAN system, a controller, a radio network controller, a base station apparatus, and a communication control method according to an embodiment of the present invention is applicable to any other system in which a mobile communication system and a frequency band in which a user equipment terminal should be in the standby state are specified. For example, the present invention is applicable to 1x-EV-DO or UMB (Ultra Mobile Broadband) in 3GPP2.

In the above-mentioned description, some specific numerical values are used for better understanding of the present invention. Unless specifically indicated, however, these numerical values are simply illustrative and any other suitable values may be used.

The present invention has been described with reference to the specific embodiments, but the embodiments are simply illustrative and variations, modifications, alterations, and substitutions could be recognized by those skilled in the art. For convenience of explanation, apparatuses or terminals according to the embodiments of the present invention have been described with reference to functional block diagrams, but these apparatuses or terminals may be implemented in hardware, software, or combinations thereof. The present invention is not limited to the above-mentioned embodiments, and variations, modifications, alterations, and substitutions can be made by those skilled in the art without deviating from the spirit of the present invention.

The present international application claims priority from Japanese Patent Application No. 2009-044633 filed on February 26, 2009, the entire contents of which are hereby incorporated herein by reference.

### [DESCRIPTION OF NOTATIONS]

- 100, 200: user equipment terminal (UE: user equipment)
- 300 (300₁, 300₂): W-CDMA base station apparatus (base transceiver station)
- 350 (350₁, 350₂): cell
- 400: radio network controller (RNC)
- 500: LTE base station apparatus (eNB: eNodeB)
- 600: access gateway
- 700: core network (CN)
- 800: controller
- 802: user equipment terminal determining unit
- 804: priority level setting unit
- 806: RRC (radio resource control) processing unit
- 808: standby system and carrier setting unit
- 810: congestion level setting unit
- 812: weight assigning unit
- 814: priority level setting unit

## Claims

1. A controller for reporting to user equipment terminals priority levels to be used for cell reselection:
wherein the user equipment terminals includes a first user equipment terminal capable of radio communication in a first mobile communication system and a second user equipment terminal capable of radio communication in a second mobile communication system whose radio access technology is different from those of the first mobile communication system, the first mobile communication system is capable of radio communication in first and second frequency bands, and the second mobile communication system is capable of radio communication in the first frequency band,
the controller comprising
a determining unit configured to determine whether a user equipment terminal under the control of the controller is the first user equipment terminal or the second user equipment terminal;
a priority level setting unit configured to set a priority level for the user equipment terminal determined by the determining unit to be the second user equipment terminal, the priority level specifying that a mobile communication system and a frequency band in which the user equipment terminal should be in a standby state are the first mobile communication system and the first frequency band, respectively; and
a reporting unit configured to report the priority level set by the priority level setting unit.

2. The controller as claimed in Claim 1, further comprising:
a congestion level setting unit configured to set, for the second user equipment terminal, a congestion level for the second system higher than that for the first system and a congestion level for the second frequency band higher than that for the first frequency band; wherein
the priority level setting unit sets the priority level based on the congestion levels set by the congestion level setting unit.

3. A controller for specifying mobile communication systems and frequency bands in which user equipment terminals should be in a standby state:
wherein the user equipment terminals includes a first user equipment terminal capable of radio communication in a first mobile communication system and a second user equipment terminal capable of radio communication in a second mobile communication system whose radio access technology is different from those of the first mobile communication system, the first mobile communication system is capable of radio communication in first and second frequency bands, and the second mobile communication system is capable of radio communication in the first frequency band,
the controller comprising
a determining unit configured to determine whether a user equipment terminal under the control of the controller is the first user equipment terminal or the second user equipment terminal;
a standby system and frequency band specifying unit configured to specify, for the user equipment terminal determined by the determining unit to be the second user equipment terminal, that a mobile communication system and a frequency band in which the user equipment terminal should be in the standby state are the first mobile communication system and the first frequency band, respectively; and
a reporting unit configured to report the mobile communication system and the frequency band specified by the standby system and frequency band specifying unit.

4. The controller as claimed in Claim 3, further comprising:
a congestion level setting unit configured to set, for the second user equipment terminal, a congestion level for the second system higher than that for the first system and a congestion level for the second frequency band higher than that for the first frequency band; wherein
the standby system and frequency band specifying unit specifies the mobile communication system and the frequency band in which the user equipment terminal should be in the standby state based on the congestion levels set by the congestion level setting unit.

5. A controller for reporting to user equipment terminals priority levels to be used for cell reselection:
wherein the user equipment terminals includes a first user equipment terminal capable of radio communication in a first mobile communication system and a second user equipment terminal capable of radio communication in a second mobile communication system whose radio access technology is different from those of the first mobile communication system, the first mobile communication system is capable of radio communication in first and second frequency bands, and the second mobile communication system is capable of radio communication in the first frequency band,
the controller comprising
a determining unit configured to determine whether a user equipment terminal under the control of the controller is the first user equipment terminal or the second user equipment terminal;
a priority level setting unit configured to set a priority level for the user equipment terminal determined by the determining unit to be the first user equipment terminal, the priority level specifying that a frequency band in which the user equipment terminal should be in a standby state is the second frequency band; and
a reporting unit configured to report the priority level set by the priority level setting unit.

6. The controller as claimed in Claim 5, further comprising:
a congestion level setting unit configured to set, for the first user equipment terminal, a congestion level for the first frequency band higher than that for the second frequency band; wherein
the priority level setting unit sets the priority level based on the congestion levels set by the congestion level setting unit.

7. A controller for specifying mobile communication systems and frequency bands in which user equipment terminals should be in a standby state:
wherein the user equipment terminals includes a first user equipment terminal capable of radio communication in a first mobile communication system and a second user equipment terminal capable of radio communication in a second mobile communication system whose radio access technology is different from those of the first mobile communication system, the first mobile communication system is capable of radio communication in first and second frequency bands, and the second mobile communication system is capable of radio communication in the first frequency band,
the controller comprising
a determining unit configured to determine whether a user equipment terminal under the control of the controller is the first user equipment terminal or the second user equipment terminal;
a standby system and frequency band specifying unit configured to specify, for the user equipment terminal determined by the determining unit to be the first user equipment terminal, that a frequency band in which the user equipment terminal should be in the standby state is the second frequency band; and
a reporting unit configured to report the frequency band specified by the standby system and frequency band specifying unit.

8. The controller as claimed in Claim 7, further comprising:
a congestion level setting unit configured to set, for the first user equipment terminal, a congestion level for the first frequency band higher than that for the second frequency band; wherein
the standby system and frequency band specifying unit specifies that the frequency band in which the user equipment terminal should be in the standby state is the second frequency band based on the congestion levels set by the congestion level setting unit.

9. A radio network controller comprising the controller as claimed in any one of Claims 1-8.

10. A base station apparatus comprising the controller as claimed in any one of Claims 1-8.

11. A communication control method in a controller for reporting to user equipment terminals priority levels to be used for cell reselection:
wherein the user equipment terminals includes a first user equipment terminal capable of radio communication in a first mobile communication system and a second user equipment terminal capable of radio communication in a second mobile communication system whose radio access technology is different from those of the first mobile communication system, the first mobile communication system is capable of radio communication in first and second frequency bands, and the second mobile communication system is capable of radio communication in the first frequency band,
the communication control method comprising the steps of
determining whether a user equipment terminal under the control of the controller is the first user equipment terminal or the second user equipment terminal;
setting a priority level for the user equipment terminal determined in the determining step to be the second user equipment terminal, the priority level specifying that a mobile communication system and a frequency band in which the user equipment terminal should be in a standby state are the first mobile communication system and the first frequency band, respectively; and
reporting the priority level set in the setting step.

12. A communication control method in a controller for specifying mobile communication systems and frequency bands in which user equipment terminals should be in a standby state:
wherein the user equipment terminals includes a first user equipment terminal capable of radio communication in a first mobile communication system and a second user equipment terminal capable of radio communication in a second mobile communication system whose radio access technology is different from those of the first mobile communication system, the first mobile communication system is capable of radio communication in first and second frequency bands, and the second mobile communication system is capable of radio communication in the first frequency band,
the communication control method comprising the steps of
determining whether a user equipment terminal under the control of the controller is the first user equipment terminal or the second user equipment terminal;
specifying, for the user equipment terminal determined in the determining step to be the second user equipment terminal, that a mobile communication system and a frequency band in which the user equipment terminal should be in the standby state are the first mobile communication system and the first frequency band, respectively; and
reporting the mobile communication system and the frequency band specified in the specifying step.

13. A communication control method in a controller for reporting to user equipment terminals priority levels to be used for cell reselection:
wherein the user equipment terminals includes a first user equipment terminal capable of radio communication in a first mobile communication system and a second user equipment terminal capable of radio communication in a second mobile communication system whose radio access technology is different from those of the first mobile communication system, the first mobile communication system is capable of radio communication in first and second frequency bands, and the second mobile communication system is capable of radio communication in the first frequency band,
the communication control method comprising the steps of
determining whether a user equipment terminal under the control of the controller is the first user equipment terminal or the second user equipment terminal;
setting a priority level for the user equipment terminal determined in the determining step to be the first user equipment terminal, the priority level specifying that a frequency band in which the user equipment terminal should be in a standby state is the second frequency band; and
reporting the priority level set in the setting step.

14. A communication control method in a controller for specifying mobile communication systems and frequency bands in which user equipment terminals should be in a standby state:
wherein the user equipment terminals includes a first user equipment terminal capable of radio communication in a first mobile communication system and a second user equipment terminal capable of radio communication in a second mobile communication system whose radio access technology is different from those of the first mobile communication system, the first mobile communication system is capable of radio communication in first and second frequency bands, and the second mobile communication system is capable of radio communication in the first frequency band,
the communication control method comprising the steps of
determining whether a user equipment terminal under the control of the controller is the first user equipment terminal or the second user equipment terminal;
specifying, for the user equipment terminal determined in the determining step to be the first user equipment terminal, that a frequency band in which the user equipment terminal should be in the standby state is the second frequency band; and
reporting the frequency band specified in the specifying step.
